# EUROPEAN PATENT SPECIFICATION

(11) **EP 2 022 110 B1**
(45) Date of publication and mention of the grant of the patent: **12.10.2011**
(21) Application number: 07783619.5
(22) Date of filing: 10.05.2007
(51) Int. Cl.: H01M 2/10, H01M 2/20

(54) **MODULAR BATTERY SYSTEM**
MODULARES BATTERIESYSTEM
SYSTÈME DE BATTERIE MODULAIRE

(30) Priority: 11.05.2006 US 799618 P; 31.01.2007 US 898409 P; 31.01.2007 US 898396 P; 31.01.2007 US 887437 P
(43) Date of publication of application: 11.02.2009
(73) Proprietor: Johnson Controls Saft Advanced Power Solutions LLC, Wilmington, DE 19801 (US)
(72) Inventor: WOOD, Steven, J., Shorewood, Wisconsin 53211 (US); TRESTER, Dale, B., Milwaukee, Wisconsin 53222 (US); HOUCHIN-MILLER, Gary, P., Fox Point, Wisconsin 53217 (US); SMITH, Nels, R., Zeeland, Michigan 49464 (US)
(74) Representative: Günther, Constantin
(86) International application number: PCT/US2007/068716
(87) International publication number: WO 2007/134198

(56) References cited:
- EP-A- 1 213 784
- EP-A1- 0 607 675
- FR-A- 2 058 740
- GB-A- 2 136 629
- US-A- 2 042 806
- US-A- 2 416 079
- US-A- 6 106 972

## Description

### BACKGROUND

The present inventions relate generally to the field of batteries and battery systems for use in vehicles. More specifically, the present inventions relate to batteries and battery systems that may be assembled and/or manufactured in a modular manner such that they may be adapted to many different models of vehicles to fit the specific space and voltage needs for that vehicle.

It is known to provide batteries for use in vehicles such as automobiles. For example, lead-acid batteries have been used in starting, lighting, and ignition applications. More recently, hybrid vehicles have been produced which utilize a battery (e.g., a nickel-metal-hydride battery) in combination with other systems (e.g., an internal combustion engine) to provide power for the vehicle.

It is also known that different hybrid vehicles have different power needs and may require different numbers of batteries to meet those power needs. It is known that the number of batteries required in a hybrid vehicle often necessitates a substantial volume to house them and that the volume provided for batteries differs between models and manufacturers of hybrid vehicles.

Presently, large and relatively complex tray assemblies are used to package the batteries. These tray assemblies are generally specific to individual vehicle models and have relatively complex geometry. For example, a hybrid version of one vehicle may use a low-profile design in which the cells cover a large surface area, but the assembly is only two layers high. In contrast, the hybrid version of a different vehicle may have batteries stacked high with a housing that is closer to the shape of a cube. In other cases, batteries may be welded or otherwise coupled in line into an assembly or "stick" which is then housed in a tray assembly and connected in series with various bus bars and connections.

Because different vehicle models utilize space within the engine, passenger, and storage compartments differently, different battery configurations may be required for each vehicle. This may require not only that battery manufactures produce a number of different batteries having a variety of sizes, shapes, and configurations, but also may require that such batteries be assembled into battery systems in a variety of different configurations (each of which may require unique electrical connections, gas routing, etc.).
FR 2 058 740 and EP 0 607 675 disclose battery systems comprising a plurality of sleeves configured to be coupled together in a plurality of configurations and wherein cooling medium passes inside of the sleeves through spaces crated between the sleeves and the cells. EP 1 213 784 discloses a battery cooling system having a plurality of hexagonal battery cells and two hexagonally shaped cooling channels that are located in the interior of the battery amongst the plurality of battery cells.

It would be advantageous to provide batteries and battery systems that may be configured for use in any of a variety of applications to eliminate the need to manufacture unique batteries for each vehicle application and with a more effective cooling. It would also be advantageous to provide a method of manufacturing battery systems that allows the system to be assembled in a relatively quick and efficient manner and which method may be configured to produce any of a variety of different battery systems.

### SUMMARY

An exemplary embodiment relates to a battery system that is configured for modular assembly. The battery system comprises a plurality of sleeves, each of which has a generally hexagonal cross section and includes a battery or cell provided therein. Each sleeve comprises features provided on an outer surface thereof that are configured for coupling the sleeve to another adjacent sleeve in the battery system. According to an exemplary embodiment, the coupling features are cylindrical tubes. A pin extends through tubes on adjacent sleeves to couple the sleeves together. According to another exemplary embodiment, the coupling features may comprise a male member and a female member that are intended to mate to secure the sleeves together in a battery system assembly. At least some of the sleeves include a plurality of protrusions extending from an inner surface of the sleeve and the battery cell to allow a cooling fluid to pass adjacent the battery cell.

Another exemplary embodiment relates to a method of assembling a battery system. The method includes providing a plurality of plastic sleeves, each of which includes a battery or cell provided therein. The method further includes coupling a first of the plurality of sleeves to a second of the plurality of sleeves. The method further includes coupling a third of the plurality of sleeves to at least one of the first and second sleeves after the first and second sleeves are coupled together.

### BRIEF DESCRIPTION OF THE DRAWINGS

FIG. 1 is a perspective view of a vehicle having a battery system according to an exemplary embodiment.

FIG. 2 is a perspective view of a battery system according to an exemplary embodiment.

FIGS. 3-4 are perspective views of a sleeve and cell according to an exemplary embodiment.

FIG. 5 is an elevational view of the sleeve shown in FIGS. 3-4 according to an exemplary embodiment.

FIG. 6 is a perspective view of a battery system or assembly that includes several sleeves according to an exemplary embodiment.

FIGS. 7-8 are perspective views of a sleeve according to another exemplary embodiment.

FIG. 9 is an elevational view of the sleeve shown in FIGS. 7-8 according to an exemplary embodiment.

FIGS. 10-11 are front and rear perspective views of a battery system or assembly that includes several sleeves according to an exemplary embodiment.

FIGS. 12-13 are perspective views of a sleeve according to another exemplary embodiment.

FIG. 14 is an elevational view of the sleeve shown in FIGS. 12-13 according to an exemplary embodiment.

FIG. 15 is a perspective view of a battery system including the sleeves in FIGS. 12-13 with a sensor in a sensor mounting according to an exemplary embodiment.

FIG. 16 is a perspective view of a portion of a sleeve according to another exemplary embodiment.

FIGS. 17A-17E illustrate methods of coupling sleeves together in a battery assembly according to various exemplary embodiments.

FIGS. 18A-18D illustrate battery systems using a modular sleeve assembly according to various exemplary embodiments.

FIG. 19 is a perspective view of a sleeve according to another exemplary embodiment.

FIG. 20 is a perspective view of a sleeve according to another exemplary embodiment.

FIG. 21 is a top plan view showing a plurality of the sleeves of FIG. 20 coupled together to form an assembly according to an exemplary embodiment.

FIG. 22 is a top plan view of a battery assembly according to an exemplary embodiment illustrating various electrical connections between adjacent cells.

FIG. 23 is a perspective view of a battery assembly according to an exemplary embodiment illustrating various electrical connections between adjacent cells.

FIG. 24 is a perspective view of a battery system or module including a plurality of interconnected sleeves according to an exemplary embodiment in which one of the sleeves includes an electronic component in the form of a relay assembly.

FIG. 25 is a schematic electrical diagram of the components of the relay assembly shown in FIG. 24 according to an exemplary embodiment.

FIG. 26 is a cross-sectional view of a pair of sleeves having electronics provided therein according to an exemplary embodiment.

FIG. 27 is a perspective view of a sleeve illustrating electrical connections with the sleeve according to an exemplary embodiment.

FIG. 28 is a plan view of a sleeve showing structures configured for electrically connecting the cell to other cells or components of a battery system according to an exemplary embodiment.

FIG. 29 is a side view of a sleeve having a relay provided therein illustrating a terminal connection according to an exemplary embodiment.

FIG. 30 is a top view of the sleeve shown in FIG. 29 according to an exemplary embodiment.

FIG. 31 is side view of a sleeve having a relay provided therein illustrating a terminal connection according to another exemplary embodiment.

FIG. 32 is a top view of a portion of a battery system according to an exemplary embodiment.

FIG. 33 is a perspective view of a battery system or module including a plurality of interconnected sleeves according to an exemplary embodiment in which one of the sleeves includes an electronic component in the form of a service disconnect device.

FIG. 34 is a schematic electrical diagram of the components of the service disconnect device shown in FIG. 33 according to an exemplary embodiment.

FIG. 35 is a top view of a sleeve according to an exemplary embodiment.

FIG. 36 is side plan view of a sleeve having a service disconnect device provided therein according to an exemplary embodiment.

FIG. 37 is cross-sectional view of the sleeve shown in FIG. 36 according to an exemplary embodiment.

FIG. 38 is a side plan view of a sleeve having a service disconnect device provided therein and being coupled to a battery management system according to an exemplary embodiment.

FIG. 39 is a cutaway view of a sleeve having a control device provided therein according to an exemplary embodiment.

FIG. 40 is a cross-sectional view of a pair of sleeves having control devices provided therein according to an exemplary embodiment.

FIG. 41 is a perspective view of a battery or cell according to an exemplary embodiment.

FIG. 42 is an perspective view of a portion of the battery or cell shown in FIG. 41 according to an exemplary embodiment.

FIG. 43 is a perspective view of a battery system or assembly comprising a plurality of batteries or cells according to an exemplary embodiment.

FIG. 44 is an exploded perspective view of a battery or cell and a member or element in the form of an airflow tuner according to an exemplary embodiment.

FIG. 45 is a perspective view of a battery or cell having openings provided in a housing thereof according to an exemplary embodiment.

FIG. 46 is a perspective view of a battery system according to an exemplary embodiment.

FIG. 47 is a cross-sectional view of a battery of the battery system of FIG. 46 according to an exemplary embodiment.

FIG. 48 is a cross-sectional view of a portion of the battery of FIG. 47 according to an exemplary embodiment.

### DETAILED DESCRIPTION

According to an exemplary embodiment, a battery system or assembly is provided that has a modular construction so as to allow it to be adapted for use in any of a variety of vehicle (e.g., automotive) applications. For example, according to an exemplary embodiment, a battery assembly may include a plurality of individual batteries or cells, each of which are included in individual housings or containers (e.g., sleeves or tubes). The sleeves may then be coupled to one another in any of a variety of configurations to produce the battery assembly tailored or configured for a particular application. According to another exemplary embodiment, a battery assembly may include a plurality of modules, each of the modules including a plurality of batteries or cells contained within a housing or container that includes spaces for each of the cells (e.g., each module may include spaces for four cells, and the modules may then be coupled or connected together with other modules or with individual sleeves, depending on the desired application).

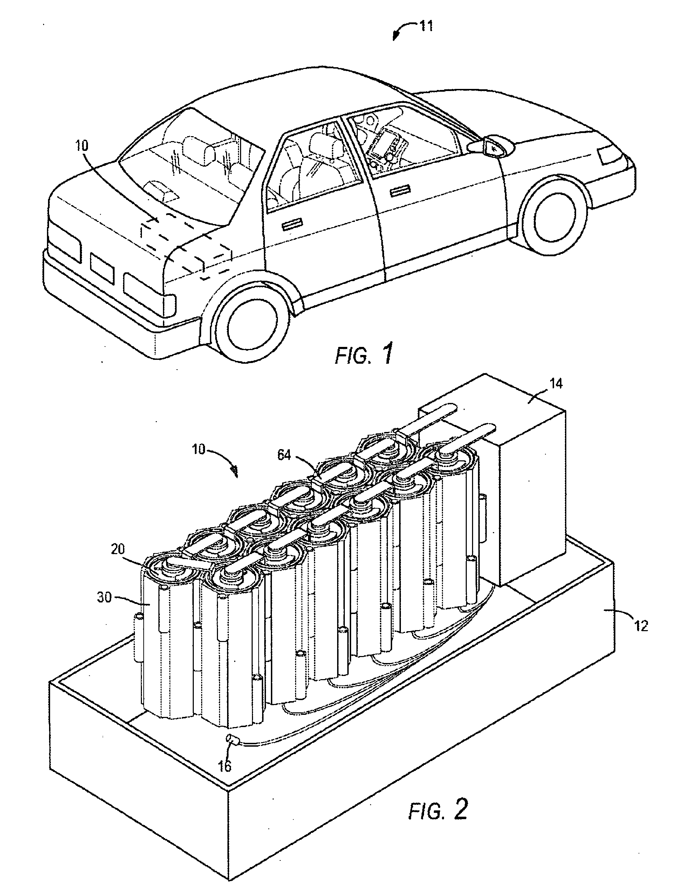

Referring now to FIG. 1, a vehicle 11 is shown according to an exemplary embodiment. Vehicle 11 includes a battery system 10. While vehicle 11 is shown as an automobile, according to various alternative embodiments, vehicle 11 may comprise a wide variety of differing types of vehicles including, among others, motorcycles, buses, recreational vehicles, boats, and the like. Battery system 10 is configured to provide at least a portion of the power required to operate vehicle 11. Further, it should be understood that according to various alternative embodiments, battery system 10 may be utilized in a variety of applications not involving a vehicle such as vehicle 11, and all such applications are intended to be within the scope of the present disclosure.

Referring now to FIG. 2, a portion of battery system or assembly 10 is shown that comprises a tray 12, a battery management system 14, one or more sensors 16, and a plurality of batteries or cells 20 (each of which includes one or more positive electrodes, one or more negative electrodes, separators between said electrodes, and any other features necessary to provide an operational battery or cell) provided within interconnecting members or elements shown in the form of a sleeve or tube 30 (e.g., a container, housing, casing, body, etc.). As shown in FIG. 2, cells 20 are electrically connected together using a plurality of bus bars 64.

While FIG. 2 shows a particular embodiment of a battery system or assembly 10, it should be understood that battery system 10 is not limited to any particular arrangement as will be appreciated by those reviewing this disclosure. For instance, while battery system 10 shown in FIG. 2 is shown with vertically oriented cells 20 arranged in a group with two substantially parallel (and offset) rows of cells, cells 20 may also be generally horizontal, be several separate groups, or arranged in other configurations. As explained in more detail below, one of the advantages of the modular battery systems disclosed herein is that the cells may be assembled in a manner such that they are configured to meet the needs presented by a variety of vehicle models.

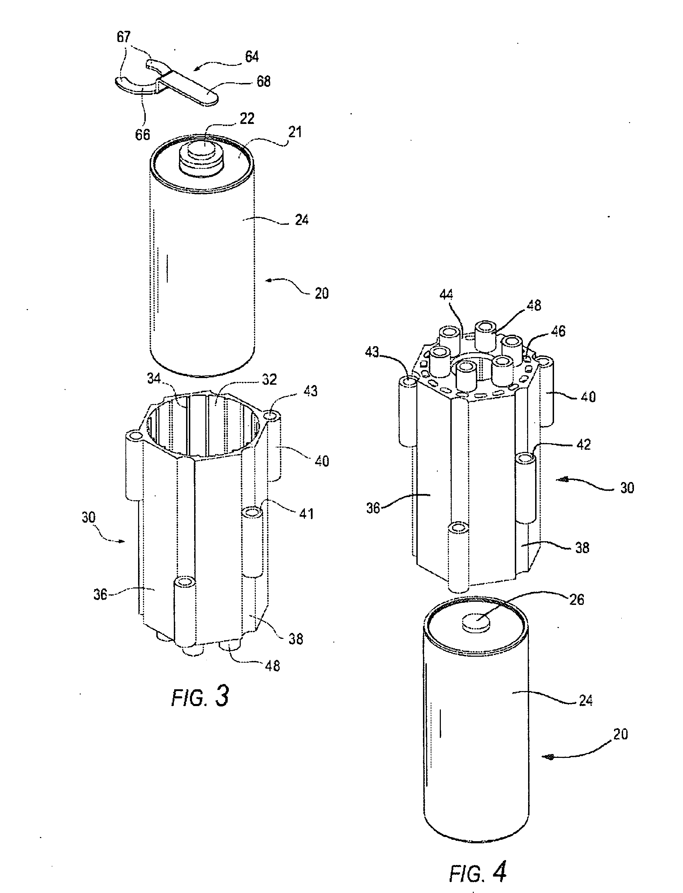

FIGS. 3-4 are exploded views of battery and sleeve assembly according to an exemplary embodiment that includes a sleeve 30, a cell 20, and a bus bar 64. In FIGS. 3 and 4 and according to an exemplary embodiment, cell 20 is shown as a generally cylindrical wound cell with a top face 21, a single terminal 22 that extends above top face 21 and is electrically isolated from top face 21, and a casing 24. It should be understood that the concepts presented in this application are not limited to cylindrical cells and may be adapted to cells of various chemistries (e.g., nickel-metal hydride, lithium-ion, lithium-polymer, etc.), shapes (e.g., cylindrical, oval, rectangular, etc.), terminal styles (e.g., blade-type, threaded rod, etc.), terminal arrangements (e.g., two terminals located on opposite distal ends, two terminals located on the same end, etc.) and sizes. Referring to FIG. 4, cell 20 may also include a safety feature, shown as a vent 26, that is generally located opposite of top face 21. Vent 26 is configured to allow internal fluids and/or gases to escape cell 20 if the pressure inside or within a cell 20 rises above a predetermined level.

Cells 20 are electrically connected with conductive members (e.g., conductors, connectors, etc.) shown as bus bars 64. According to an exemplary embodiment, bus bar 64 is a generally flat member made of a conductive material such as copper, although bus bar 64 may have any of a variety of other configurations according to other exemplary embodiments. According to one embodiment, bus bar 64 includes a first end 66 with two arms 67, and a second end 68 offset from first end 66 and substantially parallel to first end 66. First end 66 is coupled to top face 21 of cell 20 by welding or any other suitable method. According to an exemplary embodiment, when first end 66 is coupled to top face 21, arms 67 partially encircle terminal 22 but do not contact terminal 22. According to other exemplary embodiments, first end 66 may be annular and may completely encircle terminal 22. Second end 68 may be coupled to terminal 22 of a second cell by welding or other suitable means.

Sleeve 30 is a generally hollow body that is configured to receive cell 20 and is made of a relatively hard and substantially non-conductive polymer according to an exemplary embodiment. Sleeve 30 provides electrical insulation for cell 20 (e.g., so individuals picking up sleeve 30 will not be shocked by cell 20 contained within sleeve 30). Sleeve 30 substantially insulates cell 20 from the environment and is configured to couple with (e.g., interlock with, connect to, etc.) other sleeves included in the battery system.

Sleeve 30 includes an inner surface or wall 32 and an outer surface or wall 36. Inner surface 32 includes a series of protrusions or projections that are illustrated according to one exemplary embodiment shown in FIG. 3 as longitudinal ribs 34. Ribs 34 are configured to engage surfaces of the cell included within sleeve 30, and the spaces between adjacent ribs 34 act as a plurality of plenum spaces for cooling air to flow through (e.g., to cool the cell). According to one embodiment, sleeve 30 also includes a plurality of grooves or channels 38 formed in the outer surface 36 and a plurality of coupling features shown as tubes 40 coupled to the outer surface 36 and provided at least partially within grooves 38.

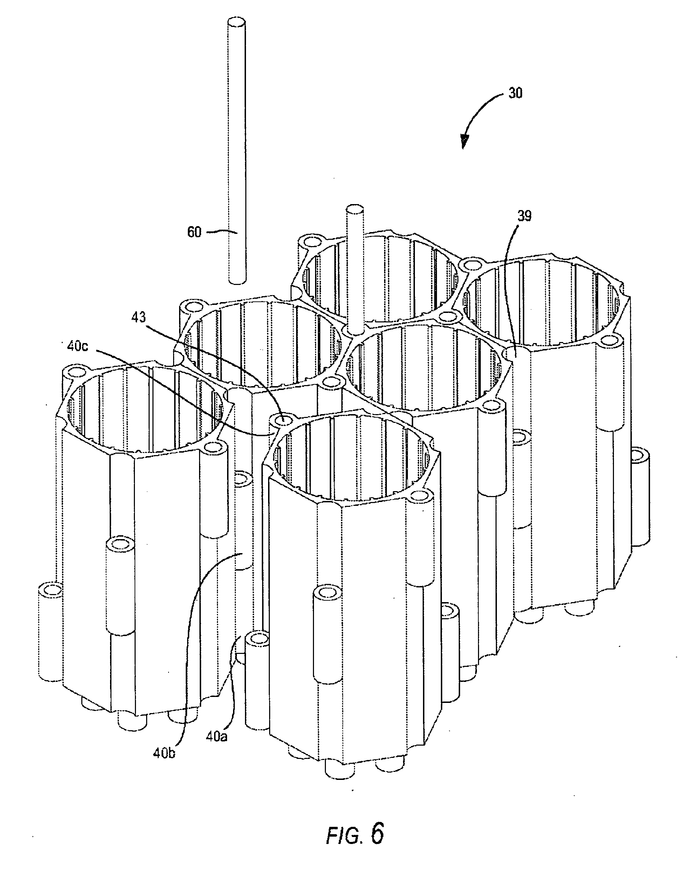

According to an exemplary embodiment, outer surface 36 is generally hexagonal and allows sleeve 30 to use space efficiently when they are coupled in a honeycomb-like arrangement (see, e.g., FIG. 6). Outer surface 36 includes grooves 38 spaced equally about the periphery of outer surface 36 generally corresponding with the vertices of the substantially hexagonal shape of sleeve 30. When sleeves 30 are coupled together, grooves 38 in three adjacent sleeves 30 form a substantially cylindrical channel 39, as shown in FIG. 6.

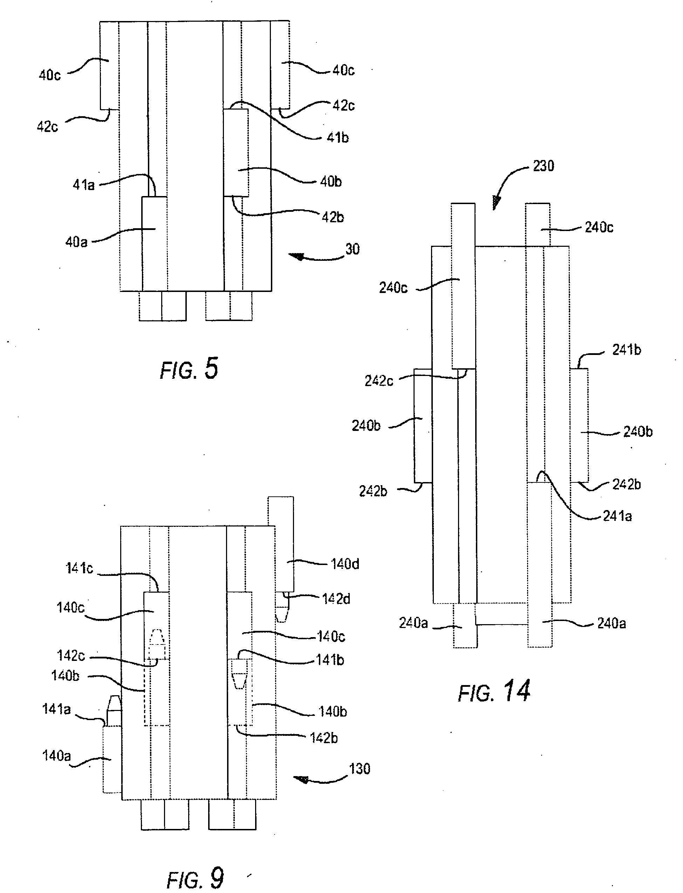

According to an exemplary embodiment, tubes 40 are provided on outer surface 36 in grooves 38 and occupy at least a portion of channels 39 created by grooves 38 when sleeves 30 are coupled together. As shown in FIGS. 3-4, tubes 40 include a top face 41 and a bottom face 42 and form a generally cylindrical channel or passage 43. Referring to FIG. 5, tubes 40 are approximately one third the length of sleeve 30 and located on three tiers (e.g., top, middle, and bottom tiers of tubes are provided for each of the cells). According to an exemplary embodiment, two tubes 40a are provided near the bottom of sleeve 30 on the first tier. Two tubes 40b are on the second tier and have bottom faces 42b generally coplanar with top faces 41a of tubes 40a below them. Two tubes 40c are on the third tier and have bottom faces 42c coplanar with top faces 41 b of tubes 40b below them. Tubes 40 on each tier are located on opposite sides of sleeve 30. The interaction of tubes 40 when sleeves 30 are coupled is shown in FIG. 6 and detailed below. It should be understood to those reviewing this disclosure that the particular size, shape, configuration and/or arrangement of the coupling features (e.g., tubes 40) may vary according to various exemplary embodiments.

Referring back to FIG. 4, sleeve 30 also includes a ledge 44 on the bottom portion of sleeve 30. Ledge 44 extends inward from inner surface 32 and engages the periphery of the bottom portion of sleeve 30 to prevent cell 20 from sliding out the bottom of sleeve 30. Ledge 44 may include a plurality of apertures 46 that are configured to allow cooling air to pass through ledge 44 and into plenum air spaces between cell 20 and sleeve 30 (e.g., the spaces between ribs 34). According to an exemplary embodiment, one or more generally cylindrical projections (legs, stands, pegs, etc.) 48 extend from ledge 44 and are configured to create a plenum air space below sleeve 30 (e.g., when sleeve 30 is supported upright by projections 48). According to other exemplary embodiments, portions of outer surface 36 of sleeve 30 may extend past ledge 44 to create a plenum air space. According to still other exemplary embodiments, tubes 40 may extend past ledge 44 to create a plenum air space.

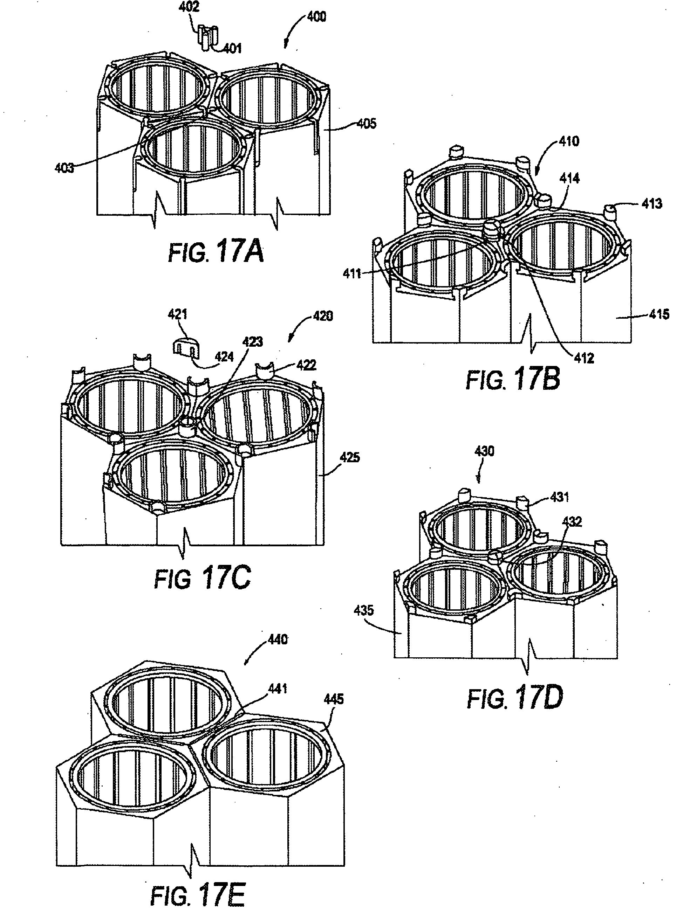

Referring now to FIG. 6, a sleeve 30 is shown being coupled or attached to an assembly of sleeves 30. Each sleeve 30 is oriented in the same direction and, according to one exemplary embodiment, sleeves 30 are assembled in rows from right to left. One tube 40a, one tube 40b and one tube 40c are aligned at each of the corners of the sleeves in the assembly (except in cases where the corners of the sleeve are toward the "outside" of the assembly, in which case there may be no adjacent cell). A coupling member (e.g., pin, shaft, dowel, etc) shown as rod 60 is inserted into channel 43 defined by the tubes aligned in the channels 39 to couple sleeves 30 together. According to exemplary embodiments, sleeves 30 may be held in the longitudinal direction by holding tray 12 (see, e.g., FIG. 2). According to various alternative embodiments, sleeves 30 may be arranged in a variety of configurations having differing perimeter measurements, peripheral dimensions, shapes, etc. to accommodate a variety of different applications. According to still other exemplary embodiments, various fastening members may be used to further reduce the tendency of sleeves 30 to slide relative to each other as shown in FIGS. 17A-17E and described in greater detail below.

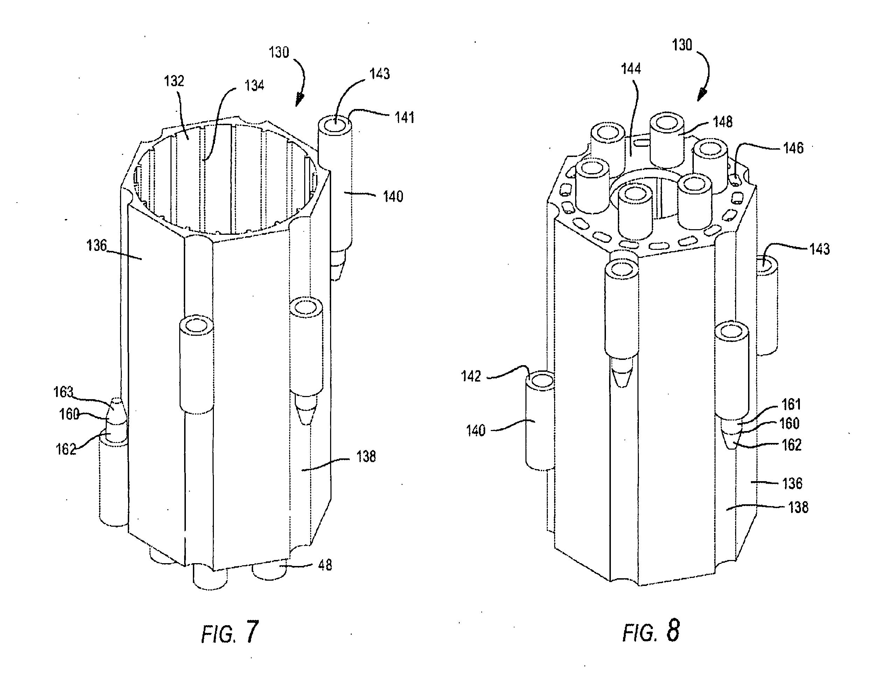

Referring now to FIGS. 7-8, a sleeve 130 is shown according to another exemplary embodiment. Sleeve 130 is a generally hollow body that is configured to receive a cell 20, substantially insulate cell 20 from the environment, and interlock with other sleeves 130. According to an exemplary embodiment, sleeve 130 is a relatively hard and substantially non-conductive polymer. Sleeve 130 comprises an inner surface 132, ribs 134, an outer surface 136, grooves 138, a plurality of tubes 140, a ledge or bottom surface 144, and several members or elements shown as projections 148. Inner surface 132 is generally cylindrical and is configured to receive a cylindrical cell 20. Inner surface 132 may include a series of protrusions, shown as longitudinal ribs 134, that are configured to create a plurality of plenum spaces for cooling air to flow through.

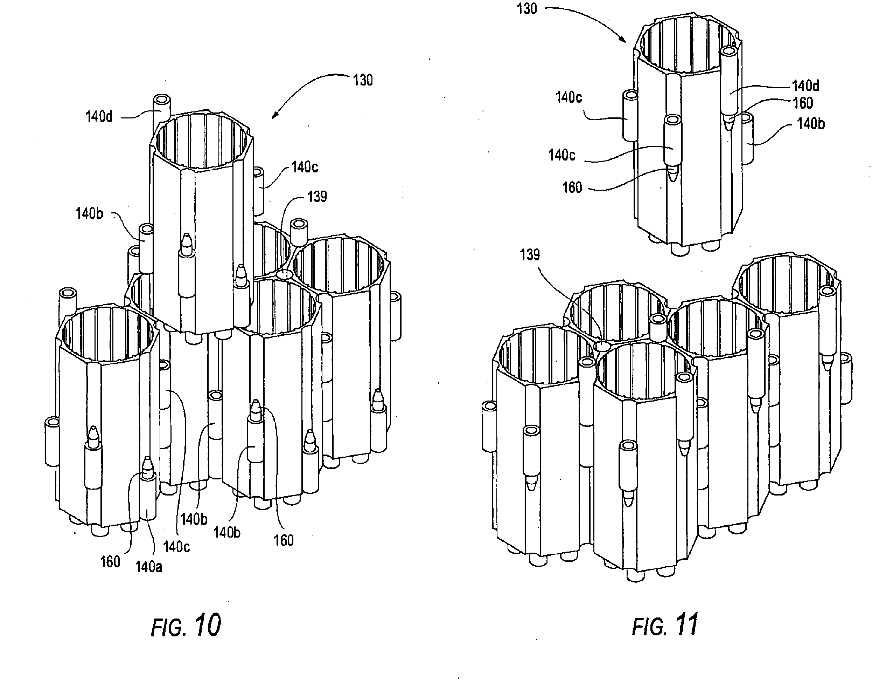

According to an exemplary embodiment, outer surface 136 is hexagonal and allows sleeves 130 to use space efficiently when sleeves 130 are coupled in a honeycomb-like arrangement (see, e.g., FIGS. 10 and 11). Outer surface 136 includes grooves 138 spaced equally about the periphery of outer surface 136 in a manner generally corresponding with the vertices of the hexagonal shape of sleeve 130. When sleeves 130 are coupled together, grooves 138 in three adjacent sleeves 130 form a substantially cylindrical channel 139, shown in FIGS. 10-11.

Members or elements 140 are provided on outer surface 136 in grooves 138 and occupy channels 139 created by grooves 138 when sleeves 130 are coupled together. Members 140 are intended to couple adjacent sleeves together in a battery assembly. Members 140 include one or both of a top face 141 and a bottom face 142 and form a generally cylindrical channel 143 therein.

FIG. 9 illustrates a plan view of sleeve 130 showing the arrangement of members 140. According to an exemplary embodiment, members 140 are located on four separate tiers on the outer surface of sleeve 130. One member 140a is near the bottom of sleeve 130 on the first tier. Two members 140b are on the second tier and have a bottom face 142b coplanar with top face 141 a of member 140a below them. Two members 140c are on the third tier and have a bottom face 142c coplanar with top face 141b of members 140b below them. One member 140d is on the forth tier on a side of sleeve 130 opposite bottom member 140a and has a bottom face 142d coplanar with top face 141c of members 140c below it. According to an exemplary embodiment, member 140d extends past the top of sleeve 130 and creates a plenum air space above sleeve 130 if the sleeve rests against a wall (e.g., a wall of tray 12, etc).

Referring further to FIGS. 7 and 8, at least one of members 140 includes a feature or element shown as a peg 160 (a stud, pin, etc.) that is configured to be received by channel 143 in member 140 on another sleeve 130 so as to couple one sleeve to another. Pegs 160 extend upward from top surface 141 or downward from bottom surface 142 of members 140 and comprise a generally cylindrical portion 161 and a generally conical portion 162. Cylindrical portion 161 has a diameter slightly less than the diameter of channel 143. Conical portion 162 is on the distal end of peg 160 and guides peg 160 into channel 143. According to an exemplary embodiment, pegs 160 extend upward from member 140a on the first tier and one of members 140b on the second tier and extend downward from one of members 140c on the third tier and member 140d on the fourth tier. The interaction of members 140 and pegs 160 when sleeves 130 are coupled is shown in FIGS. 10-11 and detailed below.

Referring to FIG. 8, according to an exemplary embodiment, sleeve 130 also includes a ledge 144 on the bottom portion thereof. Ledge 144 extends inward from inner surface 132 and engages the periphery of the bottom portion of cell 20 to prevents cell 20 from sliding out the bottom of sleeve 130. Ledge 144 may include a plurality of apertures 146 that are configured to allow cooling air to pass through ledge 144 and into plenum air spaces between cell 20 and sleeve 130. According to an exemplary embodiment, one or more generally cylindrical projections (legs, stands, pegs, etc.) 148 extend from ledge 144 and are configured to create a plenum air space beneath sleeve 130. According to other exemplary embodiments, portions of outer surface 136 of sleeve 130 may extend past ledge 144 to create a plenum air space beneath sleeve 130. According to still other exemplary embodiments, members 140 may extend past ledge 144 to create a plenum air space beneath sleeve 130.

Referring now to FIGS. 10-11, a sleeve 130 is shown being coupled together with an assembly of sleeves 130. Each sleeve 130 is oriented in the same direction and, according to one exemplary embodiment, sleeves 130 are assembled in rows from right to left. The connections between a sleeve 130 and the adjacent sleeves will be described starting with the left-most member 140c on sleeve 130 (see, e.g., FIG. 11) and continuing in a counter-clockwise direction (as depicted in FIG. 11) around sleeve 130. A member 140c on a sleeve 130 receives a peg 160 on a member 140b on an adjacent sleeve. A peg 160 on a member 140c on sleeve 130 is received by a member 140b on an adjacent sleeve. A peg 160 on a member 140d is received by a member 140c on an adjacent sleeve. A member 140b receives a peg 160 on a member 140a on an adjacent sleeve. According to exemplary embodiments, sleeves 130 may be held in the longitudinal direction by a holding tray 12. According to other exemplary embodiments, pegs 160 and members 140 may connect with in snap-fit fashion to further reduce the tendency of sleeves 130 to slide relative to each other. According to still other exemplary embodiments, other fastening members or devices may be used to reduce the tendency of sleeves 130 to slide relative to each other.

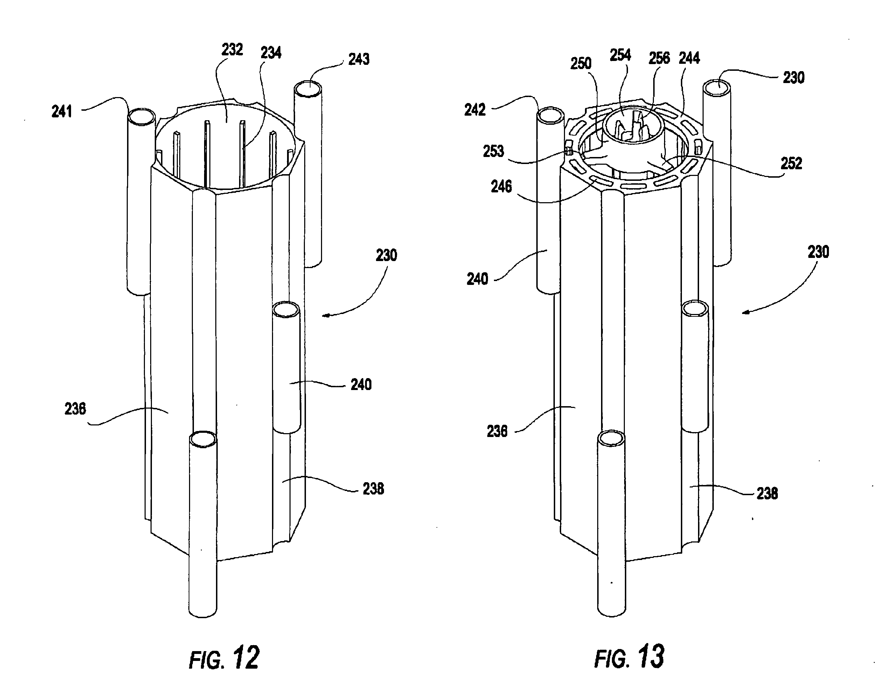

Referring now to FIGS. 12-13, an interlocking insulating body, shown as a sleeve 230, is shown according to another exemplary embodiment. Sleeve 230 is a generally hollow body that is configured to receive a cell 20, substantially insulate cell 20 from the environment, and interlock with other sleeves 230 to form a battery module or assembly. According to an exemplary embodiment, sleeve 230 is a relatively hard and substantially non-conductive polymer. Sleeve 230 comprises an inner surface 232, ribs 234, an outer surface 236, grooves 238, a plurality of tubes 240, a ledge 244, several projections 248 and a sensor mount 250. Inner surface 232 is generally cylindrical and is configured to receive a cylindrical cell such as 20. Inner surface 232 may include a series of protrusions, shown as longitudinal ribs 234 that are configured to create a plurality of plenum spaces for cooling air to flow through.

According to an exemplary embodiment, outer surface 236 is hexagonal and allows sleeves 230 to use space efficiently when they are coupled in a honeycomb-like arrangement. Outer surface 236 includes grooves 238 spaced equally about the periphery of outer surface 236 generally corresponding with the vertices of the hexagonal shape of sleeve 230. When sleeves 230 are coupled together, grooves 238 in three adjacent sleeves 230 form a substantially cylindrical channel.

Coupling features, shown as tubes 240, are provided on outer surface 236 in grooves 238 and occupy the channels created by grooves 238 when sleeves 230 are coupled together. Tubes 240 include a top face 241 and a bottom face 242 and form a generally cylindrical channel 243. Referring to FIG. 14, tubes 240 are approximately one third the length of sleeve 230 and located on three tiers. Two tubes 240a are near the bottom of sleeve 230 on the first tier. Two tubes 240b are on the second tier and have a bottom face 242b coplanar with top face 241 a of tube 240a below them. Two tubes 240c are on the third tier and have a bottom faces 242c coplanar with top faces 241b of tubes 240b below them. Tubes 240 on each tier are located on opposite sides of sleeve 230. The interaction of tubes 240 when sleeves are coupled is similar to that shown in FIG. 6 and detailed above. According to exemplary embodiments, sleeves 230 may be held in the longitudinal direction by a holding tray 12. According to other exemplary embodiments, a fastening member may be used to further reduce the tendency of sleeves 230 to slide relative to each other.

According to an exemplary embodiment, sleeve 230 also includes a ledge 244 on the bottom portion of sleeve 230. Ledge 244 extends inward from inner surface 232 and engages the periphery of the bottom face of cell 20 to prevent cell 20 from sliding out the bottom of sleeve 230. Ledge 244 may include a plurality of apertures 246 that are configured to allow cooling air to pass through ledge 244 and into plenum air spaces between cell 20 and sleeve 230. According to an exemplary embodiment, lowest tubes 240a (see FIG. 14) extend below ledge 244 to create a plenum air space beneath sleeves 230 if sleeves 230 are placed against a wall (i.e. against a side wall of tray 12). Tubes 240c may likewise extend upwards, past the top surface of sleeve 230 to create a plenum air space above sleeve 230. According to other exemplary embodiments, portions of outer surface 36 of sleeve 30 may extend past ledge 44 to create a plenum air space.

Referring further to FIG. 13, sleeve 230 may also include a mounting structure such as sensor mount 250 that is configured to receive electronics such as a sensor (e.g., a temperature sensor, or a sensor such as sensor 16 shown in FIG. 2) located near the bottom of sleeve 230. According to an exemplary embodiment, sensor mount 250 comprises one or more arms 252, a cylindrical wall 254, and clips 256. Arms 252 extend inward from ledge 44 and support sensor mount 250. Each arm 252 may include a groove 253 that cuts across arm 252 near ledge 244. Groove 253 reduces the cross section of arm 252, creating a weakened point where arm 252 can break if the pressure in cell 20 becomes excessive, for example, and vent 26 is deployed. Wall 254 extends downward from sleeve 230 and encloses two or more clips 256. Clips 256 are configured to receive a sensor and couple sensor to sleeve 230.

Sensor mount 250 may be configured to secure any suitable number of sensors (e.g., sensors 16 as shown in FIG. 2). According to an exemplary embodiment, sensor mount 250 may be configured to secure both a temperature sensor and a pressure sensor. Additionally, according to other exemplary embodiments, more than one sensor mount 50 may be provided for a single sleeve. Moreover, while the illustrated embodiment of FIG. 13 shows three arms 52 connecting sensor mount 250 to sleeve 230, any number of arms or structural members may be utilized to attached the mounting structure or sensor mount to the sleeve according to other exemplary embodiments. Further, while the illustrated embodiment of FIG. 13 shows three clips 256, any suitable number of clips may be used to secure the sensor in place. Moreover, the mounting structure may include other fasteners or attachment mechanisms to hold the sensor in place according to other exemplary embodiments.

According to an exemplary embodiment, sensor mount 250 is insulated from a tray assembly such as tray 12 (see FIG. 2). Wall 254 (e.g., a shroud rib, etc.) serves to prevent environmental factors (e.g., cooling from a direct cooling unit for the cells or heat from other cells) from influencing the sensor readings from other cells. Wall 254 is attached to ledge 244 through sensor mount 250.

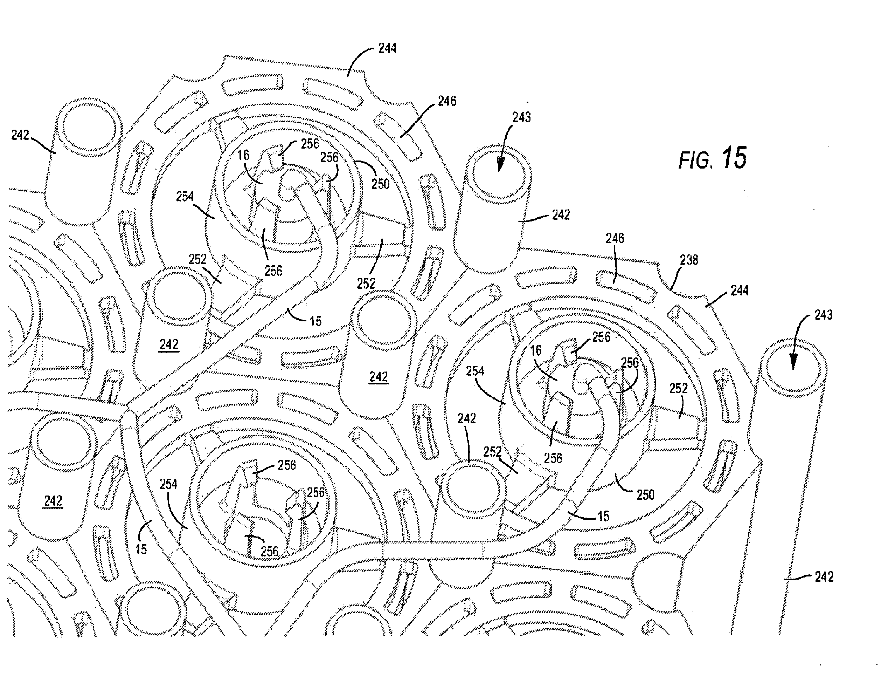

Sensor mount 250 may be utilized to secure any monitoring or non-monitoring device to sleeve 230. For example, as shown in FIG. 15, a pressure or gas sensor 16 may be secured to sleeve 230. Sensor 16 may be connected to, for example, battery management unit 14 (as shown in FIG. 2) via electronic connectors such as wires 15.

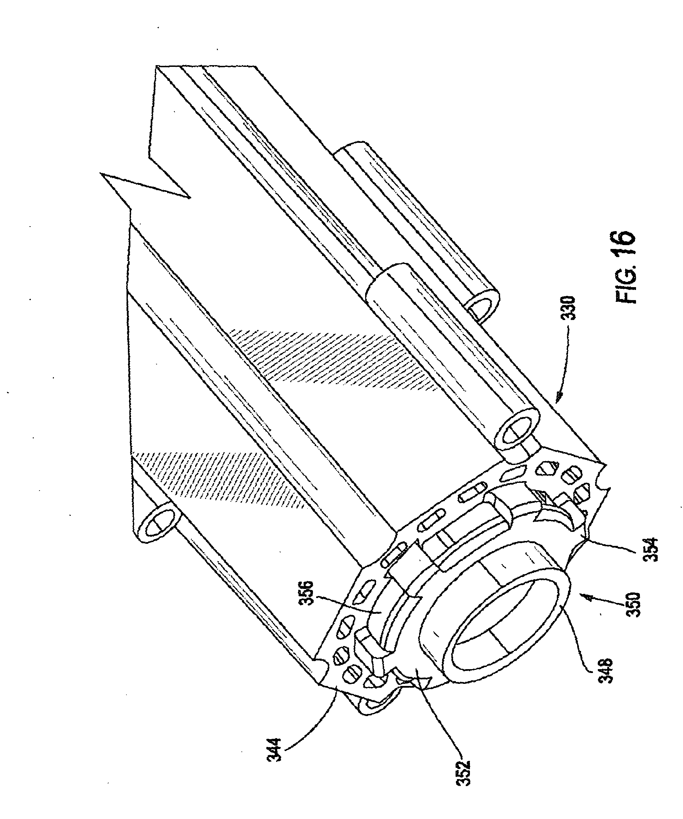

Referring now to FIG. 16, according to another exemplary embodiment, a sleeve 330 may include a vent housing 350. Vent housing 350 is configured to accommodate a cell (e.g., such as cell 20) with a deployable vent on the end of the cell. Vent housing 350 includes an end wall 352 that is offset from a ledge 344 at the bottom portion of sleeve 330. End wall 352 is coupled to ledge 344 with one or more arms or connecting members 354. Connecting members 354 form one or more openings 356 that allow gas vented from the cell to escape out of sleeve 330. Sleeve 330 may further include a generally cylindrical projection (leg, stand, peg, collar, etc.) 348 that extends from end wall 352 and is configured to create a plenum air space below sleeve 330.

While the above description and accompanying FIGS. illustrate certain methods for coupling adjacent sleeves together, FIGS. 17A-17E illustrate several methods of coupling adjacent sleeves together according to various other exemplary em bodiments.

For example, referring to FIG. 17A, an insert 401 for a battery system 400 according to an exemplary embodiment is shown. Insert 401 is a generally triangular member with enlarged portions 402 at each longitudinal edge. Channels 403 are provided at each vertex of the adjacent sleeves 405 provided in the battery system 400. Channels 403 from adjacent sleeves receive enlarged portions 402 of inserts to further couple adjacent sleeves 405 together.

Referring to FIG. 17B, a clip 411 for a battery system 410 according to an exemplary embodiment is shown. Clip 411 is a generally c-shaped member with an open end 412. Protrusions 413 are provided on sleeves 415 extending from each vertex of adjacent sleeves 415. Posts 414 are formed at each intersection by protrusions 413 from adjacent sleeves 415 and have a diameter less than the inner diameter of clip 411, but slightly greater than the width of open end 412. Clips 411 are secured onto posts 414 to couple adjacent sleeves 415 together.

Referring to FIG. 17C, a cap 421 (shown in cross-section) for a battery system 420 is shown according to an exemplary embodiment. Members or elements 422 in the form of protrusions or extensions are provided as part of sleeves 425. Each members 422 forms approximately one-third of a post 423 extending from the top surfaces of sleeves 425. Cap 421 includes grooves or channels (e.g., cutouts) 424 that are configured to couple cap 421 to post 423.

Referring to FIG. 17D, a battery system 430 includes a plurality of sleeves 435 joined together at a node 432 according to an exemplary embodiment. The node is formed of three extensions or projections 431, each of which forms approximately one-third of node 432. Each of the three sleeves 435 adjacent to node 432 contributes one projection 431 to node 432. The three projections 431 forming node 432 may then be heat staked together in the area where the projections come together.

Referring to FIG. 17E, a battery system 440 includes a plurality of sleeves 445 that arc heat staked together in a region 441 between adjacent cells according to an exemplary embodiment. In the embodiment shown in FIG. 17E, the surfaces of the sleeves 445 are relatively flat or planar and abut or contact adjacent sleeves.

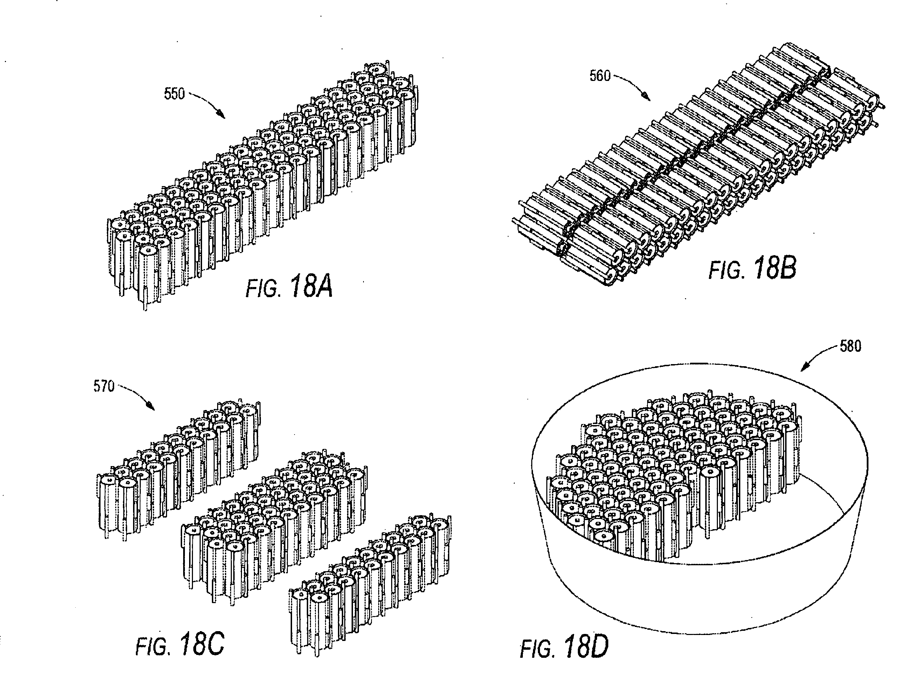

Referring to FIGS. 18A-18D, schematic representations of various exemplary arrangements of battery systems are shown. The modular nature of the battery system is intended to allow substantial flexibility in the arrangement of the battery system to accommodate housing constraints presented by various vehicles. FIG. 18A illustrates a battery system 550 with vertically oriented cells in a single group that is generally rectangular. FIG. 18B illustrates a battery system 560 with horizontally oriented cells in two generally rectangular groups arranged substantially back-to-back. FIG. 18C illustrates a battery system 570 with vertically oriented cells in three generally rectangular groups. FIG. 18D illustrates a battery system 580 with vertically arranged cells in a generally circular group.

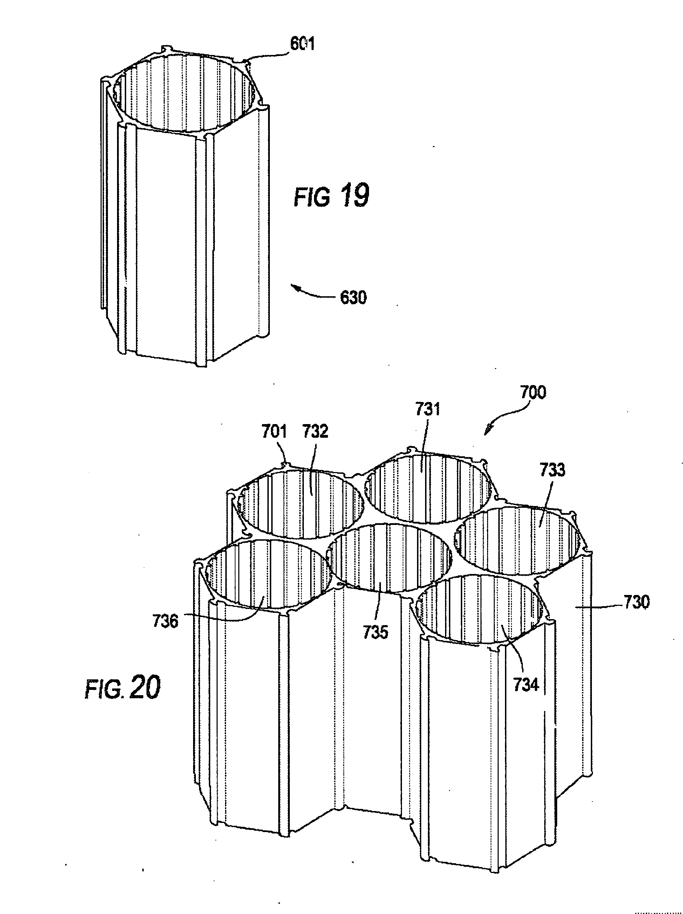

Referring to FIG. 19, a battery sleeve 630 is shown according to another exemplary embodiment. The sleeve 630 includes a feature (e.g., an extension, protrusion, hook, etc.) 601 extending from each of the cornmers or vertices of sleeve 630. Such features may interlock with complementary features provided on adjacent sleeves 630. Various geometries may be used for feature 601 according to various exemplary embodiments.

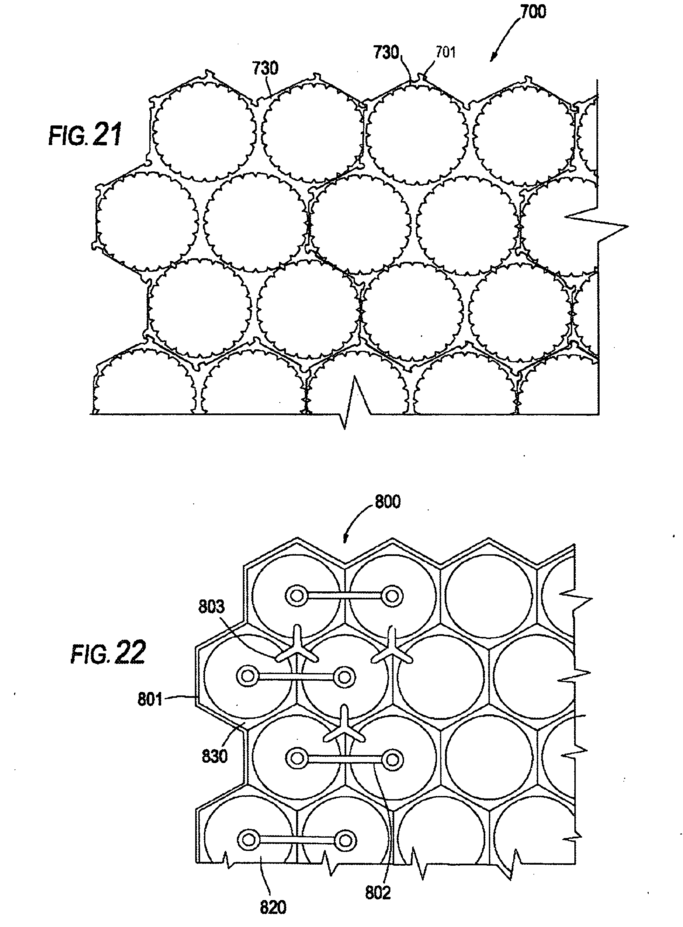

FIGS. 20-21 illustrate a battery system 700 according to another exemplary embodiment. System 700 includes a plurality of modules 730, each of which includes a plurality of spaces (shown as spaces 731-736) for receiving batteries, cells, or other components therein. According to an exemplary embodiment, modules 730 are molded as a single piece, and have features 701 provided on the outer surface thereof for coupling with adjacent modules 730, as illustrated in FIG. 21.

Referring to FIG. 22, according to one embodiment, a battery system or assembly 800 includes a plurality of sleeves 830 having cells 820 provided therein. A conformal housing 801 is provided that matches the shape of the array or grouping of sleeves 830 and cells 820. Conductive members or elements 802 (e.g., a bus bar, etc.) may electrically couple adjacent cells 820 together, and members or elements 803 (e.g., spacers, etc.) may be provided to separate adjacent sleeves 830 by a predetermined distance from each other.

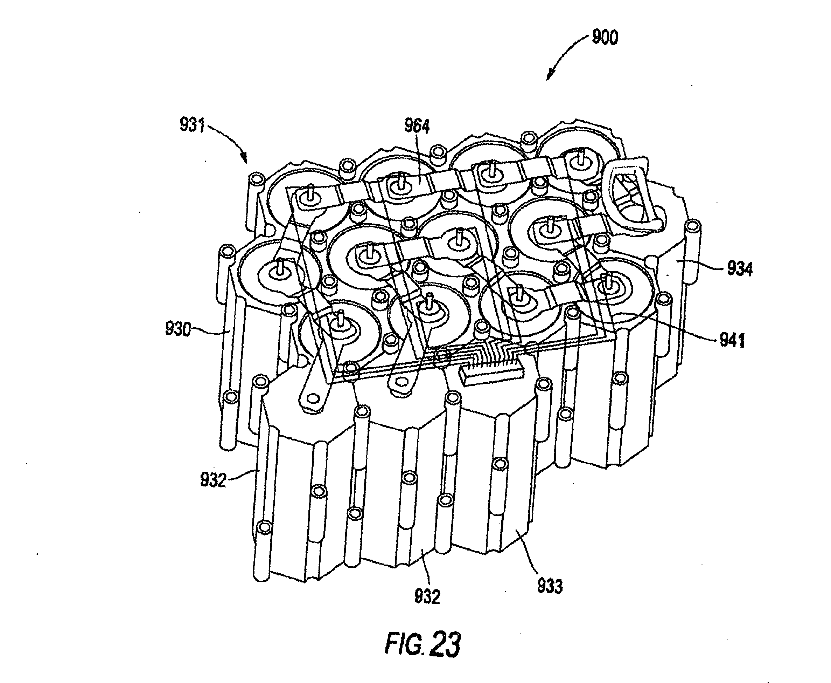

FIG. 23 illustrates a battery system or assembly 900 according to an exemplary embodiment having a plurality of sleeves 930 coupled together (each of which includes a cell or other system contained therein). A plurality of conductive members or elements 964 in the form of bus bars are also provided to electrically couple the cells to each other and/or to other systems. As shown in FIG. 23, a first sleeve or group of sleeves (denoted by reference numeral 931) include batteries or cells therein. A second sleeve or group of sleeves 932 includes relay assemblies provided therein. A third sleeve or group of sleeves 933 includes a cell sub-group controller for managing a group of cells (e.g., group 931) and is electrically connected via wires or cables 941 to one or more of the cells included in the group. A fourth sleeve or group of sleeves 934 includes a cell disconnect mechanism having a fuse intended to disconnect one or more of the cells within the group (e.g., group 931) from a vehicle electrical system. According to other exemplary embodiments, any of a variety of systems may be provided in a sleeve that may be assembled with cell-containing sleeves (e.g., gas management systems such as venting systems, battery management electronics and software, and any of a variety of other mechanical and/or electrical systems).

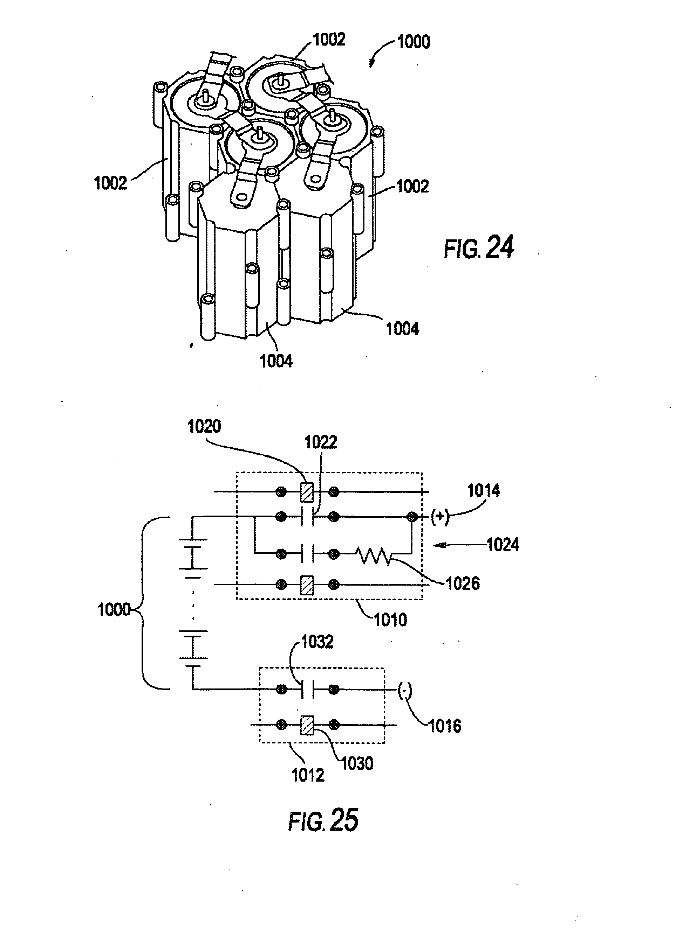

Referring now to FIGS. 24-40, while various exemplary embodiments described herein (e.g., the embodiment shown in FIGS. 3-4) illustrate sleeves containing cell elements (e.g., electrodes, separators, etc.), sleeves may alternatively be used in a battery system to contain other structures or devices. For example, a sleeve similar to that shown in FIG. 3 may have electronics provided therein instead of a cell element. In this manner, other electronic components of the battery system may be included in the battery system in modular fashion. The location of the electronics may be selected depending on the configuration of the battery system (e.g., number of cells, footprint, ease of assembly, etc.). The use of sleeves to house electronics and other components allows for relatively flexible design of the battery system and may provide other benefits such as reduced assembly and materials costs.

FIG. 24 illustrates a portion of a battery system or module 1000 that includes a plurality of sleeves 1002 similar to those shown in FIGS. 3 and 4. According to one embodiment, module 1000 may be a subcomponent of a larger battery system (e.g., battery system 900 shown in FIG. 23). A number of sleeves 1002 have cell elements (e.g., electrodes, separators, etc.) provided therein. According to an exemplary embodiment, one or more of the sleeves 1004 provided in battery system 1000 includes a component, such as a relay assembly, other than a battery cell provided therein. Sleeves 1004 having relay assemblies provided therein may be provided toward an outer edge of the battery module 1000, or may be provided within the sleeve arrangement according to other exemplary embodiments. Coupling of the relay assembly sleeve 1004 with other sleeves 1002 in the battery system 1000 may be accomplished in a manner similar to the methods described with respect to the other exemplary embodiments described herein.

According to an exemplary embodiment, the relay assembly is configured to switch the battery module on or off based on a signal provided by a system (e.g., a battery management or monitoring system such as battery management system 14 shown in FIG. 2, a vehicle system such as a CANBUS, etc.). According to an exemplary embodiment, one sleeve 1004 including a relay assembly is provided for the positive terminal of the module and one sleeve 1004 including a relay assembly is provided for the negative terminal of the assembly.

FIG. 25 is a schematic electrical diagram for battery module or system 1000 having a positive relay assembly 1010 and a negative relay assembly 1012. A positive terminal or connector 1014 extends from the positive relay assembly 1010 and a negative terminal or connector 1016 extends from the negative relay assembly 1012. The positive relay assembly 1010 includes a switch actuator 1020 and a switch 1022 for connecting and disconnecting battery module 1000. Positive relay assembly 1010 also includes a precharging circuit 1024 that includes a resistor 1026 for buffering a surge that may result when the battery module is switched "on" by the relay. A negative relay assembly 1012 is provided for connecting and disconnecting the battery module 1000, and also includes a switch actuator 1030 and a switch 1032 according to an exemplary embodiment. Between the positive and negative relay assemblies (each of which are included in a sleeve) are a plurality of sleeves 1002 having cell elements provided therein.

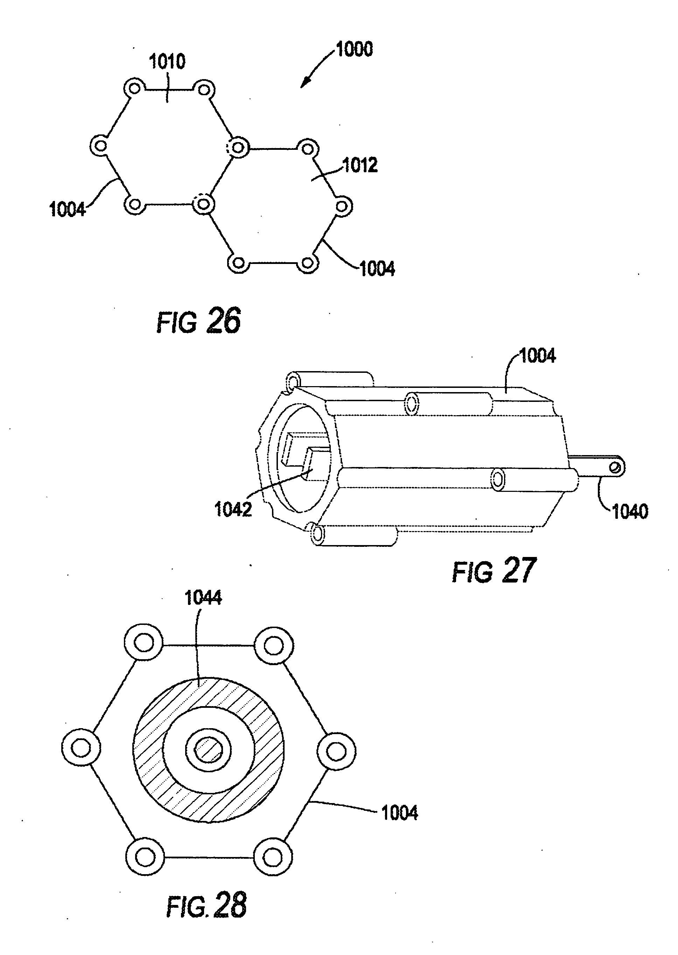

FIG. 26 illustrates an embodiment in which positive relay assembly 1010 and negative relay assembly 1012 are provided adjacent each other. It should be noted that according to other exemplary embodiments, the two relay assemblies may be provided at different locations in battery assembly 1000. According to still other exemplary embodiments, one relay assembly may occupy two sleeves 1004 that are joined together (e.g., where the walls between adjacent sleeves are completely or partially removed to allow the components of the relay to be mechanically and/or electrically connected to each other).

FIG. 27 is a perspective view of a sleeve 1004 having a relay assembly (e.g., relay 1010) provided therein. As shown therein, a high voltage power connection 1040 may be provided for coupling the battery module 1000 to other vehicle systems. A low voltage connection 1042 may also be provided for coupling the components of the relay assembly to a source of power. The high voltage 1040 and low voltage 1042 connections may have any of a variety of configurations depending on various factors. For example, FIG. 28 is a top plan view of sleeve 1004 according to an exemplary embodiment in which connectors 1044 (e.g., one or more connection pads for negative/positive connections to a battery cell) are provided for connecting the sleeve 1004 to an OEM specific terminal assembly.

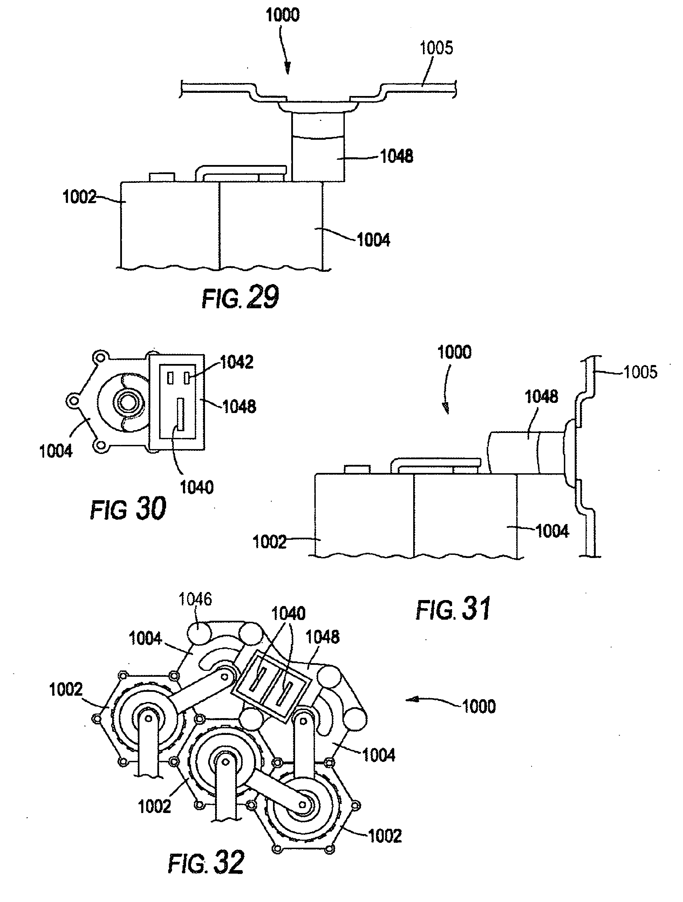

The orientation of the high/low voltage connector(s) or terminal(s) extending from the sleeve containing the relay assembly may vary according to other exemplary embodiments. FIGS. 29-30 illustrate a configuration in which the terminal or connector extends axially from the top of the sleeve 1004. A member or element 1048 is mechanically and electrically connected to the terminal and includes both high voltage 1040 and low voltage 1042 connectors according to an exemplary embodiment. The member 1048 is provided such that it is in contact with a portion of a housing 1005 for the battery module or assembly 1000. FIG. 31 illustrates a configuration in which the terminal or connector extends perpendicular to the axial direction at the top of the relay assembly sleeve 1004 and toward housing 1005.

According to an exemplary embodiment shown in FIG. 32, both the positive and negative terminals or connectors for battery assembly 1000 may be provided adjacent each other. As shown in FIG. 32, locations for two high voltage blades/plugs 1040 are provided adjacent each other (or as part of a single assembly). The two sleeves 1004 underlying the high voltage positive and negative blade locations include the positive 1010 and negative 1012 relay assemblies, respectively. While only the high voltage connectors 1040 are shown, it should be understood that the low voltage connectors may be provided in a similar arrangement or according to any suitable alternative embodiment.

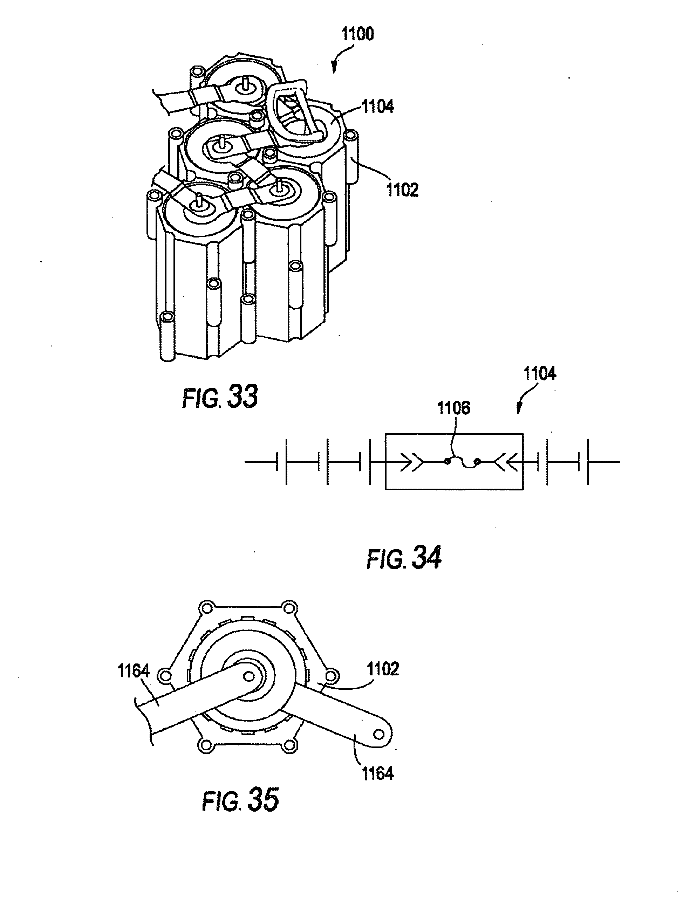

Other types of electronic components may also be provided in sleeves according to other exemplary embodiments. For example, FIG. 33 illustrates a battery module or assembly 1100 in which one of the sleeves 1102 includes a service disconnect system 1104 (see, e.g., FIG. 34) provided as a component thereof. The service disconnect system 1104 is a system that allows the battery module 1100 to be manually taken out of service when the service disconnect system 1104 is actuated. According to an exemplary embodiment, the service disconnect system 1104 includes a fuse (e.g., a serviceable fuse) 1106 that may be actuated by an individual servicing the battery module. According to an exemplary embodiment, the service disconnect 1104 may be configured such that it is actuated automatically when a portion of the housing surrounding battery module 1100 is moved (e.g., a lid or other structure that is moved will also automatically trigger the service disconnect). According to other exemplary embodiments, the service disconnect mechanism 1104 may include a handle or other structure to allow an individual to manually operate it.

FIG. 34 is a schematic electrical diagram illustrating features of the service disconnect 1104. As shown therein, the service disconnect 1104 includes fuse 1106 that is configured to take the battery module 1100 out of service when actuated. FIG. 35 illustrates additional features of sleeve 1102 according to an exemplary embodiment. For example, bus bar 1164 may be used (e.g., via laser welding or other methods) to couple adjacent cells together. According to one embodiment, bus bar 1164 may be similar to bus bar 64 discussed in more detail above.

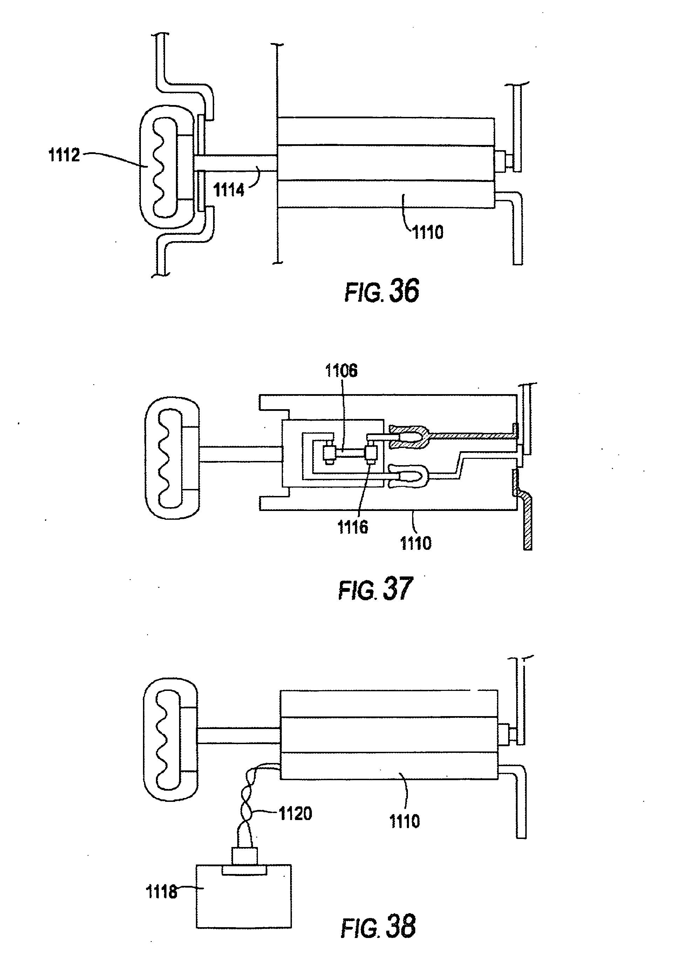

FIGS. 36-37 illustrate an exemplary embodiment of a sleeve 1110 having a service disconnect system provided therein. As shown in FIG. 36, a handle 1112 is coupled to sleeve 1110 by an actuator shaft 1114. When handle 1112 is pulled by an operator, actuator shaft 1114 moves outward and away from sleeve 1110 (i.e., to the left as shown in FIG. 37) to blow a fuse 1106 included in a fuse holder 1116. Fuse holder 1116 may optionally be removable from sleeve 1110 without removing sleeve 1110 from a battery system so that the fuse 1106 may be serviced (e.g., replaced). According to another exemplary embodiment, fuse 1106 may be non-serviceable such that the entire sleeve and disconnect assembly must be replaced in the event of a service disconnect. According to still other exemplary embodiments, the service disconnect does not use a fuse, but rather uses electrical contacts that are aligned and in contact with each other when the battery module is operating and which are moved out of contact (e.g., by the handle and actuator shaft) to disconnect the system. As illustrated in FIG. 38, sense leads 1120 to a battery management or monitoring system 1118 (or to other systems) may also be provided (e.g., to prevent "live" disconnects of the system while the vehicle is in operation).

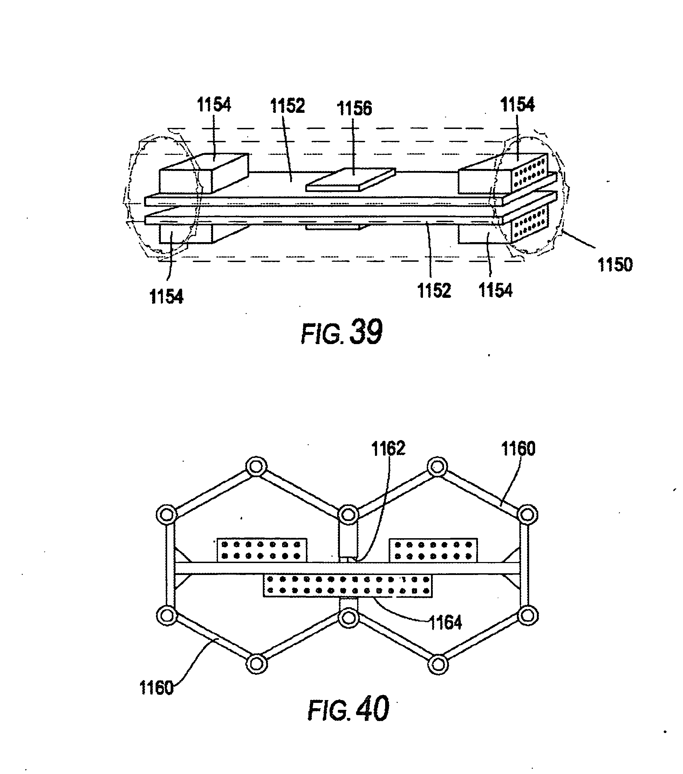

FIGS. 39-40 illustrate other exemplary embodiments in which other types of electronics may be included within one or more sleeves 1150 of a battery module. FIG. 40 shows two circuit boards 1152 provided within sleeve 1150. Multi-pin connectors 1154 are provided for coupling the electronics to other parts of the battery system (e.g., to a battery management system, to a power system, to a CANBUS system, to a temperature sensor, etc.). The board 1152 may include a microprocessor 1156 and/or other electronic components.

As shown in FIG. 40, adjacent sleeves 1160 may have electronic components 1164 that extend between the sleeves 1160. For example, two sleeves 1160 may be manufactured separately and apertures 1162 formed in walls of sleeves 1160 may be aligned to allow electronics 1164 to extend between the sleeves 1160. According to another exemplary embodiment, sleeves 1160 may be integrally formed with each other such that there are two hexagonal-shaped spaces that are in communication with each other to provide additional space for the components provided within the sleeves. In this manner, the two-sleeve configuration may be provided in the battery system in a location that might otherwise be occupied by two cells.

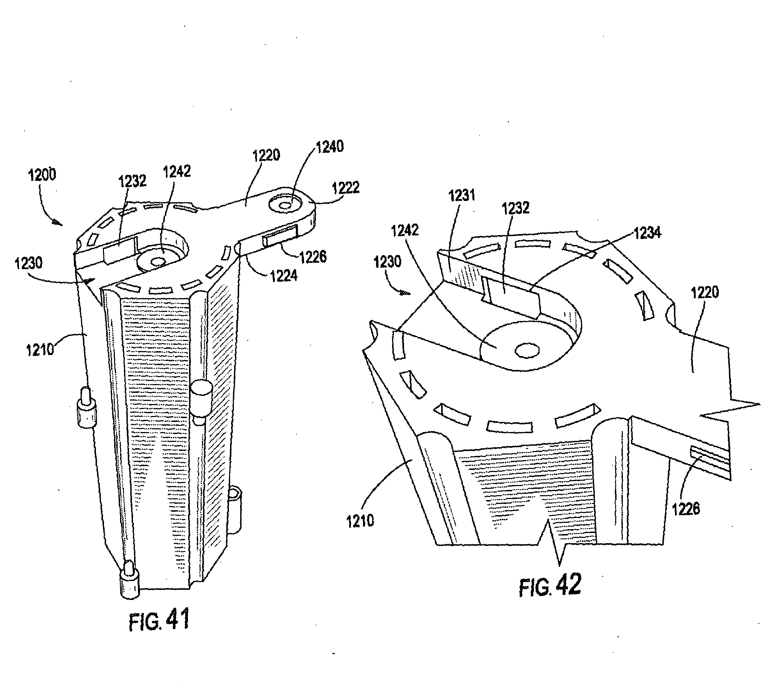

Referring now to FIGS. 41-45, according to various alternative embodiments, it may be desirable to provide features for sleeves that allow relatively quick and simple electric and mechanical coupling between adjacent batteries or cells included in a battery system. FIGS. 41-42 illustrate perspective views of a battery or cell 1200 having a sleeve 1210 according to an exemplary embodiment. An upper end of the sleeve 1210 includes a member or element 1220 (e.g., an extension, protrusion, ledge, shelf, etc.) that extends therefrom.

According to an exemplary embodiment as shown in FIG. 41, a distal end 1222 of member 1220 has a generally rounded configuration, although the particular configuration of member 1220 may vary according to other exemplary embodiments. Member 1220 is intended for coupling to an adjacent battery or cell 1200 by engaging a c tout 1230 (e.g., a depression, channel, etc.) of an adjacent sleeve 1210 such that the sleeves 1210 are coupled together. A member or element 1226 (e.g., an extension, protrusion, etc.) is provided on a side 1224 of member 1220 for engaging an aperture or opening 1232 provided in a wall 1231 of cutout 1230. In this manner, member 1220 may be securely locked or snapped into place within cutout 1230. According to an exemplary embodiment, member 1226 may be relatively flexible to allow a snap fit type connection between member 1226 and opening 1232 (e.g., by engaging one or more walls 1234 of opening 1232).

According to an exemplary embodiment, member 1220 is integrally formed with sleeve 1210 in the molding process. According to other exemplary embodiments, member 1220 may be produced separately and coupled to sleeve 1210.

To electrically couple adjacent batteries or cells together, conductive members 1240 and 1242 are provided as shown in FIGS. 41-42. Conductive members 1240 and 1242 may be formed of any suitable material (e.g., copper, aluminum, etc.) and may have any of a variety of shapes, sizes, and configurations according to various exemplary embodiments. According to an exemplary embodiment, conductive members 1240 and 1242 are part of a single piece of conductive materials that extends from cutout 1230 and through member 1220. According to other exemplary embodiments, conductive members 1240 and 1242 may be formed separately and coupled together by a conductive element or member. According to other exemplary embodiments, conductive members 1240 and 1242 may have opposite polarities (e.g., conductive member 1240 may be electrically coupled to a positive electrode within a battery and conductive member 1242 may be coupled to a negative electrode within a battery).

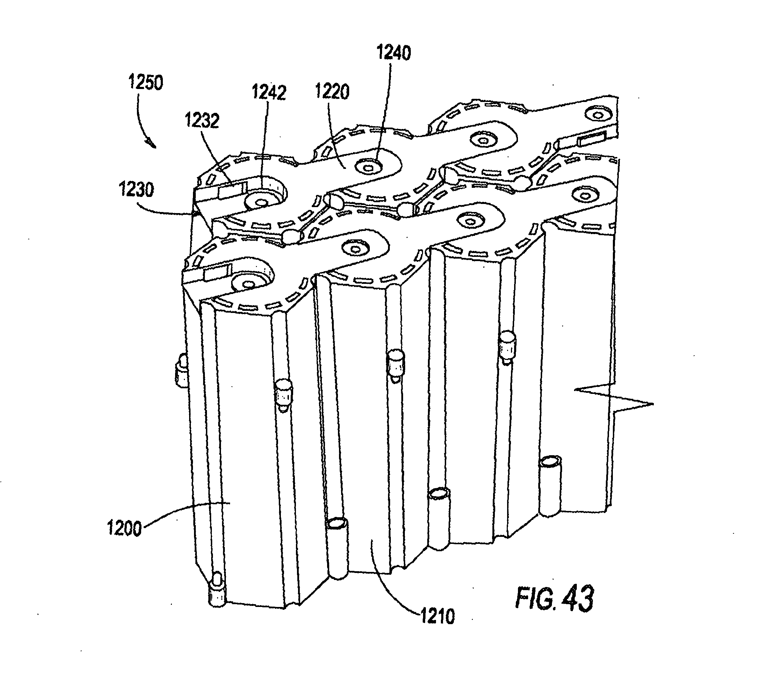

Referring now to FIG. 43, a battery system or assembly 1250 (e.g., a battery module) includes a plurality of batteries or cells 1200 mechanically and/or electrically joined or coupled together. A conductive member 1240 of one battery (which is provided as part of member 1220) is configured for coupling electrically and mechanically to a conductive member 1242 provided in a cutout 1230 of an adjacent battery. The conductive member 1240 of a first battery may be coupled to a conductive member 1242 of an adjacent battery using bolts, screws, or other fasteners. According to a particular exemplary embodiment, the conductive members 1240 and 1242 of adjacent batteries may be welded together (e.g., using laser welding or other suitable welding methods).

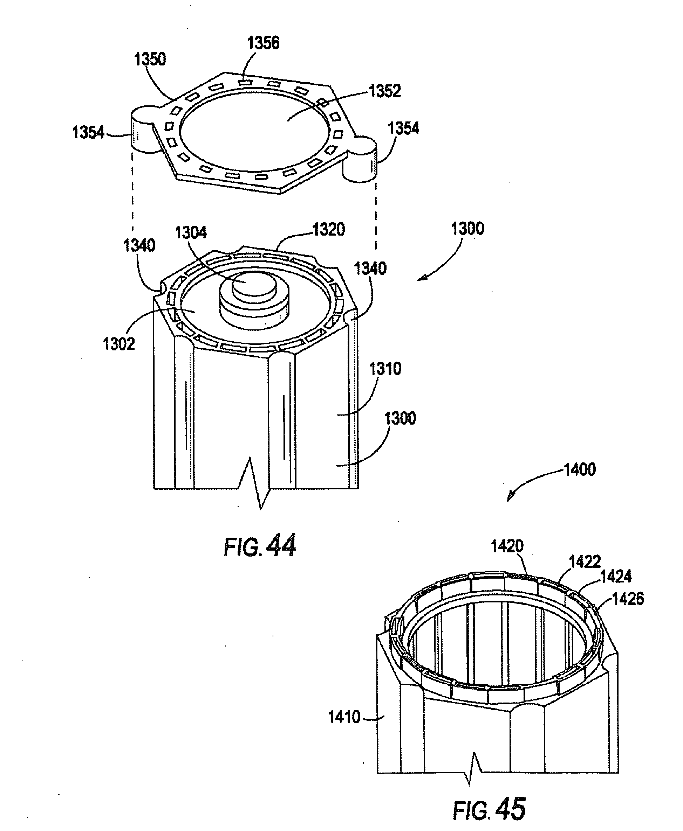

Referring now to FIG. 44, an exploded perspective view of a battery assembly 1300 having a cell 1302 and a housing or casing 1310 in the form of a sleeve (referred to hereinafter as sleeve 1310) is shown. Sleeve 1310 includes a number of openings or apertures 1320 (e.g., holes, channels, etc.) provided therein and extending in the axial direction along the outer perimeter of sleeve 1310. Openings 1320 are configured to allow a cooling substance (e.g., a fluid such as a gas) to flow adjacent cell 1302.

A member or element 1350 (e.g., a cap, lid, adapter, etc.) may be provided for coupling with battery assembly 1300. Member 1350 is provided as having a generally hexagonal shape with an opening or aperture 1352 provided through the center thereof to allow access to a battery terminal or post 1304 when member 1350 is coupled to battery assembly 1300. Member 1350 includes one or more members or elements 1354 (e.g., extensions, protrusions, etc.) that are configured to engage channels 1340 formed in an external surface of sleeve 1310. According to an exemplary embodiment, member 1350 includes two members 1354 configured to engage channels in sleeve 1310 of battery assembly 1300. According to other exemplary embodiments, a different number of members (e.g., members 1354) may be utilized.

Because it may be desirable to control the amount of cooling for each of the batteries or cells in a battery module, member 1350 may include a plurality of openings or apertures 1356 (e.g., holes) provided therein that are configured to align with openings 1320 provided in sleeve 1310. According to an exemplary embodiment, each of openings 1356 provided in member 1350 are of equal size. According to other exemplary embodiments, openings 1356 may be of a variety of sizes (e.g., three or four different sizes).

According to an exemplary embodiment, openings 1356 in member 1350 are intended to restrict or control the flow of cooling fluid through openings 1320 provided in sleeve 1310. As shown in FIG. 44, each of openings 1356 provided in member 1350 are smaller than openings 1320 provided in sleeve 1310. In this manner, openings 1356 are intended to restrict the flow of cooling fluid.

According to an exemplary embodiment, member 1350 (and members similar thereto) may be used to modify the airflow throughout a battery assembly or module (e.g., as an airflow tuner, regulator, etc.). For example, certain cells in the module, due to their position and other factors, may require more cooling than other batteries in the module. A number of different members similar to member 1350 may be used to equalize or modify the cooling throughout the module. Thus, one member may include larger holes to allow more airflow through the openings in the sleeves, while another member may include smaller holes to restrict the flow of air around a battery that requires less cooling. Further, members (similar to member 1350) may be provided that have openings of different sizes in the member (e.g., to modify the airflow around a single battery). Those reviewing this disclosure will appreciate that any of a variety of configurations of member 1350 may be possible to modify the flow of cooling fluid through openings 1320 in sleeves 1310 according to various other exemplary embodiments.

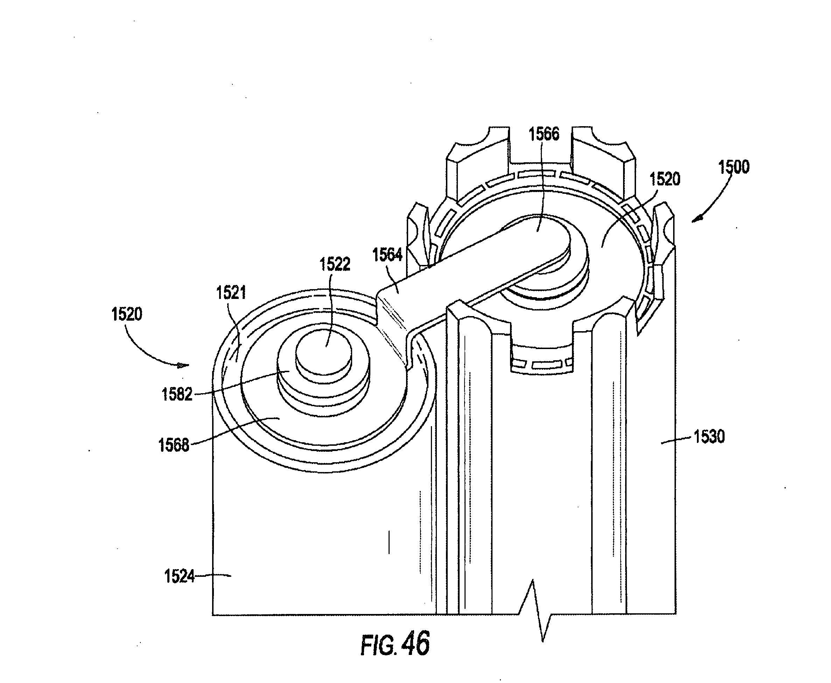

It should also be noted that the configuration of the openings or apertures provided in a sleeve of a battery may be provided in various sizes. For example, FIG. 45 is a perspective view of a battery or cell 1400 having openings 1420, 1422, 1424 provided in a housing or casing 1410 (e.g., a sleeve) thereof according to an exemplary embodiment (reference numeral 1426 represents a closed or sealed opening). As shown in FIG. 45, each of openings 1420, 1422, and 1424 has a different size, and will have a different fluid flow associated therewith. For example, opening 1420 represents a full (e.g., 100 percent) opening, opening 1422 and 1424 represent partial (e.g., 70 and 40 percent, respectively) openings, and 1426 represents a closed (e.g., zero percent) opening. While a particular arrangement of opening sizes is shown in FIG. 46, any of a variety of configurations and arrangements may be used according to other exemplary embodiments. For example, only 70 percent and 40 percent openings may be used according to an exemplary embodiment. According to another exemplary embodiment, 100, 70, and 40 percent openings may be used. Any of a variety of combinations of opening sizes may be used to obtain a desired flow of cooling fluid.

It should also be noted that sleeves having varied openings such as those shown in FIG. 45 may be used in conjunction with a member (e.g., member 1350 shown in FIG. 44) to further control the fluid flow. Again, any of a variety of configurations may be possible for a particular application and any given configuration may depend on a variety of factors.

It should be noted that the features illustrated in the various exemplary embodiments shown herein may be combined in a variety of ways. For example, the features illustrated in FIGS. 41-43 and/or FIGS. 44-45 may be utilized in conjunction with the battery module shown in FIG. 6. Those reviewing this disclosure will appreciate that various combinations of the features described herein are possible, and all such combinations are intended to be included within the scope of this disclosure.

Referring now to FIGS. 46-48, a battery system 1500 is shown according to an exemplary embodiment. FIG. 46 shows a pair of batteries or cells 1520 with only one battery 1520 illustrated with a sleeve 1530 for illustrative purposes. Sleeve 1530 may be similar or identical to any of the sleeves discussed herein with respect to the various exemplary embodiments, or sleeve 1530 may be of any other suitable configuration for receiving cell 1520.

According to one embodiment, cell 1520 includes a body portion, or can, 1524, having a top face or lid 1521, and a first terminal 1522 extending above top face 1521. Can 1524 is configured to act as the second terminal for cell 1520, and is insulated from first terminal 1522 by an insulator 1582. According to an exemplary embodiment, cell 1520 contains a wound element, or electrode roll 1570 that is connected at one end to a negative collector 1572 and at the other end to a positive collector 1578. Electrode roll 1570 is insulated from can 1524 by an insulator 1586. Negative collector 1572 is conductive coupled to first terminal 1522. Positive collector 1578 is conductively coupled to a can 1524 via a positive connection element 1574, such that can 1524 acts as a second terminal for cell 1520.

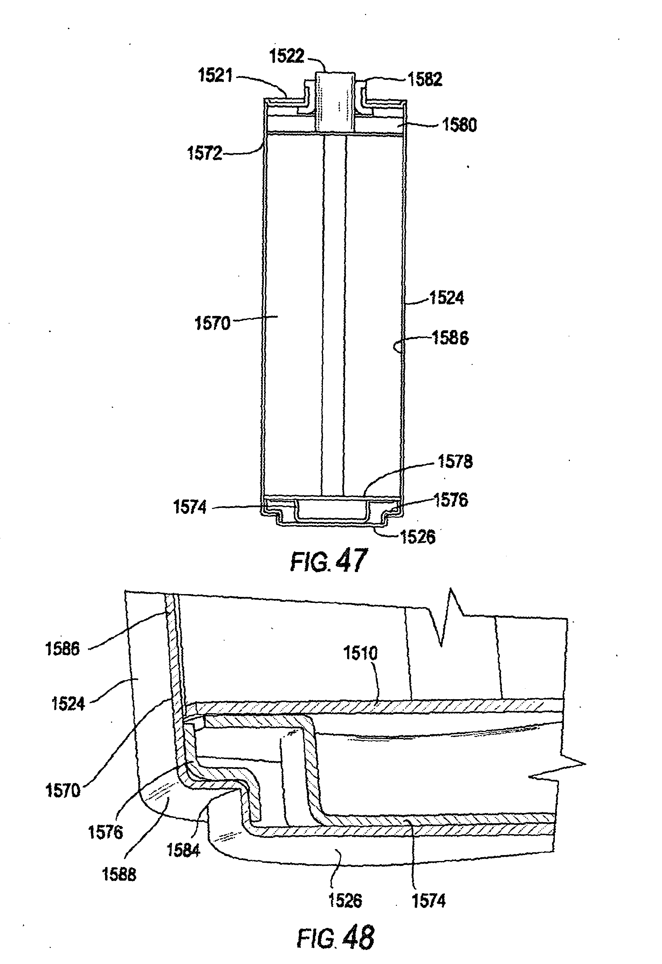

As shown in FIGS. 46 and 47, first terminal 1522 is a generally cylindrical member that lies substantially on the central longitudinal axis of cell 1520. Providing a terminal such as first terminal 1522 may reduce manufacturing costs associated with providing complexly-shaped terminals and reduce assembly costs by substantially eliminating the need to install terminal 1522 in any particular alignment(e.g., because of the circular cross-section of terminal 1524).

Referring now to FIG. 48, according to an exemplary embodiment, can 1524 includes an end wall 1588 that has a pressure relief portion shown as vent 1526. According to one embodiment, vent 1526 is coupled to end wall 1588 via a weakened portion 1584. According to one embodiment, weakened portion 1584 is formed by providing an area of reduced material thickness. According to various alternative embodiments, weakened portion 1584 may be formed using an suitable method.

Vent 1526 and weakened portion 1584 provide a pressure-relief mechanism for cell 1520. Should the pressure within cell 1520 rise to a predetermined level, vent 1526 is configured to deploy (e.g., "break away") from end wall 1588 at weakened portion 1584, thereby permitting fluids to escape from can 1524.

According to one embodiment, when vent 1526 deploys, the conductive path between can 1524 and electrode roll 1570 is broken. To prevent reestablishment of a conductive path between electrode roll 1570 and can 1524, an insulator 1576 is provided that according to one embodiment substantially conforms to an inner surface of a portion of can 1524. Insulator 1576 may be positioned such that if a high pressure condition within cell 1524 causes electrode roll to shift toward end wall 1584, insulator 1576 will substantially prevent electrode roll 1576 from reestablishing a conductive path with can 1524 while vent 1526 is in the deployed position.

Referring back to FIG. 46, according to an exemplary embodiment, two or more cells 1520 may be conductively coupled together using a conductive member shown as bus bar 1564. As shown in FIG. 46, bus bar 1564 is a generally flat member and is made of a conductive material (e.g., copper, etc.). Bus bar 1564 includes a first end 1566 and a second end 1568. As shown in FIG. 46, according to one embodiment, first end 1566 is configured to be conductively coupled (e.g., laser welded, etc.) to first terminal 1522 of a first cell 1520 and second end 1568 is configured to be conductively coupled to can 24 of a second cell 1520. It should be understood that bus bar 1564 and first and second ends 1566, 1568 may take any suitable shapes and/or sizes that are suitable to particular applications of conductively coupling cells 1520.

Those reviewing this disclosure will appreciate that various advantages may be obtained in the use and implementation of a modular battery system such as any one or more of those described herein. For example, individual sleeves (or modules containing multiple sleeves) may be produced at relatively low cost, since all sleeves are substantially identical, thus minimizing the number of parts that must be produced. This also reduces the tooling costs for manufacturing equipment. The design of the battery system or assembly may then be scalable (e.g., by including a different number of sleeves or modules for varying power requirements for a vehicle or other system in which the battery system is utilized). Such design also reduces the amount of time required from the time a customer requests a battery system to the time it may be produced, since an appropriately-scaled battery system may be produced in a relatively quick and efficient manner.

It should be noted that references to "top" and "bottom" in this description are merely used to identify various elements as are oriented in the FIGS., with "top" being generally the side of the sleeve into which the battery is inserted, and "bottom" being generally the side opposite the "top." It should be recognized that the orientation of the sleeves may vary greatly depending on the application and that "top" would still refer to the generally open end of the sleeve where the cell is inserted and "bottom" would refer to the generally closed end of the sleeve no matter the orientation of the sleeve relative to the vehicle.

For the purpose of this disclosure, the term "coupled" means the joining of two members directly or indirectly to one another. Such joining may be stationary in nature or moveable in nature. Such joining may be achieved with the two members or the two members and any additional intermediate members being integrally formed as a single unitary body with one another or with the two members or the two members and any additional intermediate members being attached to one another. Such joining may be permanent in nature or may be removable or releasable in nature.

It is important to note that the construction and arrangement of the battery system as shown in the various exemplary embodiments is illustrative only. Although only a few embodiments of the present inventions have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages presented in the present application. Accordingly, all such modifications are intended to be included within the scope of the present inventions. Other substitutions, modifications, changes and omissions may be made in the design, operating conditions and arrangement of the various exemplary embodiments without departing from the scope of the present inventions.

## Claims

1. A battery system (10, 400, 410, 420, 430, 440, 5550, 560, 570, 580, 700, 800, 900, 1000), comprising:
a plurality of sleeves (30, 130, 230, 330, 405, 415, 425, 435, 445, 630, 730, 830, 930, 1002), wherein each of the plurality of sleeves is coupled to another of the plurality of sleeves;
wherein at least some of the sleeves include a battery cell (20, 280) provided therein and wherein the sleeves are configured to be coupled together in a plurality of different configurations, **characterized in that** at least some of the sleeves include a plurality of protrusions (34, 134, 234) extending from an inner surface of the sleeve to define a space between the inner surface of the sleeve and the battery cell provided therein to allow a cooling fluid to pass adjacent the battery cell.

2. The battery system of claim 1, wherein each of the plurality of sleeves (30, 130, 230, 330, 405, 415, 425, 435, 445, 630, 730, 830, 930, 1002) has an exterior having a generally hexagonal cross-section.

3. The battery system of claim 1, wherein at least some of the plurality of sleeves (30, 130, 230, 330, 405, 415, 425, 435, 445, 630, 730, 830, 930, 1002) are permanently coupled together.

4. The battery system of claim 1, wherein a first one of the plurality of sleeves (30, 130, 230, 330, 405, 415, 425, 435, 445, 630, 730, 830, 930, 1002) includes a tube member (40, 140, 240) configured to receive a pin member (160) on a second one of the plurality of sleeves (30, 130, 230, 330, 405, 415, 425, 435, 445, 630, 730, 830, 930, 1002).

5. The battery system of claim 1,
further comprising at least one pin member (60);
wherein a first one of the plurality of sleeves (30, 130, 230, 330, 405, 415, 425, 435, 445, 630, 730, 830, 930, 1002) includes a first tube member (40, 240) and a second one of the plurality of sleeves includes a second tube member (40, 240) configured to align with the first tube member (40, 240); and
wherein the pin member (60) is configured to be received in both the first tube (40, 240) member and the second tube member (40, 240).

6. The battery system of claim 1, wherein a first one of the plurality of sleeves (30, 130, 230, 330, 405, 415, 425, 435, 445, 630, 730, 830, 930, 1002) includes a peg (601, 701) configured to engage a channel on a second one of the plurality of sleeves.

7. The battery system of claim 1, further comprising:
a clip member (411);
wherein a first one of the plurality of sleeves (415) includes a first projection (413) and
a second one of the plurality of sleeves (415) includes a second projection (413); and
wherein the clip member (411) is configured to couple the first projection (413) with the second projection (413).

8. The battery system of claim 1, further comprising:
a cap member (421);
wherein a first one of the plurality of sleeves (425) includes a first projection (422) and
a second one of the plurality of sleeves (425) includes a second projection (422); and
wherein the cap member (421) is configured to couple the first projection (422) with the second projection (422).

9. The battery system of claim 1, further comprising:
an insert (401);
wherein a first one of the plurality of sleeves (405) includes a first recess (403) in a first sidewall and a second one of the plurality of sleeves (405) includes a second recess (403) in a second sidewall;
wherein the insert (401) is configured to engage both the first recess (403) and the second recess (403).

10. The battery system of claim 1, wherein a first one of the plurality of sleeves (30, 130, 230, 330, 405, 415, 425, 435, 445, 630, 730, 830, 930, 1002) is configured to be heat staked to a second one of the plurality of sleeves (30, 130, 230, 330, 405, 415, 425, 435, 445, 630, 730, 830, 930, 1002).

11. The battery system of claim 1, wherein a first one of the plurality of sleeves (30, 130, 230, 330, 405, 415, 425, 435, 445, 630, 730, 830, 930, 1002) is configured to be laser welded to a second one of the plurality of sleeves (30, 130, 230, 330, 405, 415, 425, 435, 445, 630, 730, 830, 930, 1002).

12. The battery system of claim 1, wherein each battery cell includes a vent portion (26) configured to permit gases to escape from the interior of the battery cell when the pressure within the battery cell reaches a predetermined level.

13. The battery system of claim 12, wherein the sleeves (30, 130, 230, 330, 405, 415, 425, 435, 445, 630, 730, 830, 930, 1002) including the battery cells each include at least one aperture proximate the vent portion to permit gases that escape from the battery cell to pass through the sleeves (30, 130, 230, 330, 405, 415, 425, 435, 445, 630, 730, 830, 930, 1002).

14. The battery system of claim 1, wherein at least one of the plurality of sleeves (30, 130, 230, 330, 405, 415, 425, 435, 445, 630, 730, 830, 930, 1002) includes at least one of a relay assembly (1010, 1012), a service disconnect (1104), and a printed circuit board (1152) assembly.

15. The battery system of claim 1, wherein the plurality of protrusions extending from the inner surface of the plurality of sleeves (30, 130, 230, 330, 405, 415, 425, 435, 445, 630, 730, 830, 930, 1002) are longitudinal ribs (34, 134, 234).

## Patentansprüche

1. Ein Batteriesystem (10, 400, 410, 420, 430, 440, 5550, 560, 570, 580, 700, 800, 900, 1000), aufweisend:
eine Vielzahl von Hülsen (30, 130, 230, 330, 405, 415, 425, 435, 445, 630, 730, 830, 930, 1002), wobei jede der Vielzahl von Hülsen mit einer anderen der Vielzahl von Hülsen gekoppelt ist;
wobei wenigstens einige der Hülsen eine Batteriezelle (20, 280) aufweisen, die darin vorgesehen ist, und wobei die Hülsen dazu eingerichtet sind, in einer Vielzahl von unterschiedlichen Konfigurationen aneinandergekoppelt zu werden, **dadurch gekennzeichnet, dass** wenigstens einige der Hülsen eine Vielzahl von Vorsprüngen (34, 134, 234) aufweisen, die sich von einer inneren Oberfläche der Hülse erstrecken, um einen Raum zwischen der inneren Oberfläche der Hülse und der in der Hülse vorgesehenen Batteriezelle zu definieren, um zu ermöglichen, dass ein Kühlfluid an der Batteriezelle entlang geführt wird.

2. Das Batteriesystem nach Anspruch 1, wobei jede der Vielzahl von Hülsen (30, 130, 230, 330, 405, 415, 425, 435, 445, 630, 730, 830, 930, 1002) eine Außenseite mit im Wesentlichen hexagonalen Querschnitt aufweist.

3. Das Batteriesystem nach Anspruch 1, wobei wenigstens einige der Vielzahl von Hülsen (30, 130, 230, 330, 405, 415, 425, 435, 445, 630, 730, 830, 930, 1002) permanent aneinander gekoppelt sind.

4. Das Batteriesystem nach Anspruch 1, wobei eine erste der Vielzahl von Hülsen (30, 130, 230, 330, 405, 415, 425, 435, 445, 630, 730, 830, 930, 1002) ein Rohrelement (40, 140, 240) aufweist, das dazu eingerichtet ist, ein Stiftelement (160) von einer zweiten der Vielzahl von Hülsen (30, 130, 230, 330, 405, 415, 425, 435, 445, 630, 730, 830, 930, 1002) aufzunehmen.

5. Das Batteriesystem nach Anspruch 1, weiter aufweisend wenigstens ein Stiftelement (60);
wobei eine erste der Vielzahl von Hülsen (30, 130, 230, 330, 405, 415, 425, 435, 445, 630, 730, 830, 930, 1002) ein erstes Rohrelement (40, 240) aufweist und eine zweite der Vielzahl von Hülsen ein zweites Rohrelement (40, 240) aufweist, das dazu eingerichtet ist, mit dem ersten Rohrelement (40, 240) zu fluchten; und wobei das Stiftelement (60) eingerichtet ist, sowohl in dem ersten Rohrelement (40, 240) als auch in dem zweiten Rohrelement (40, 240) aufgenommen zu werden.

6. Das Batteriesystem nach Anspruch 1, wobei eine erste der Vielzahl von Hülsen (30, 130, 230, 330, 405, 415, 425, 435, 445, 630, 730, 830, 930, 1002) einen Haken (601, 701) aufweist, der dazu eingerichtet ist, an einem Kanal an einer zweiten der Vielzahl von Hülsen einzugreifen.

7. Das Batteriesystem nach Anspruch 1, weiter aufweisend:
ein Bügelelement (411);
wobei eine erste der Vielzahl von Hülsen (415) einen ersten Überstand (413) und
eine zweite der Vielzahl von Hülsen (415) einen zweiten Überstand (413) aufweist;
und wobei das Bügelelement (411) dazu eingerichtet ist, den ersten Überstand (413) mit dem zweiten Überstand (413) zu koppeln.

8. Das Batteriesystem nach Anspruch 1, weiter aufweisend:
ein Deckelelement (421);
wobei eine erste der Vielzahl von Hülsen (425) einen ersten Überstand (422) und
eine zweite der Vielzahl von Hülsen (425) einen zweiten Überstand (422) aufweist;
und wobei das Deckelelement (421) dazu eingerichtet ist, den ersten Überstand (422) mit dem zweiten Überstand (422) zu koppeln.

9. Das Batteriesystem nach Anspruch 1, weiter aufweisend:
ein Einsatzteil (401);
wobei eine erste der Vielzahl von Hülsen (405) eine erste Aussparung (403) in einer ersten Seitenwand und eine zweite der Vielzahl von Hülsen (405) eine zweite Aussparung (403) in einer zweiten Seitenwand aufweist;
wobei das Einsatzteil (401) dazu eingerichtet ist, sowohl in die erste Aussparung (403) als auch in die zweite Aussparung (403) einzugreifen.

10. Das Batteriesystem nach Anspruch 1, wobei eine erste der Vielzahl von Hülsen (30, 130, 230, 330, 405, 415, 425, 435, 445, 630, 730, 830, 930, 1002) eingerichtet ist, durch Wärme an eine zweite der Vielzahl von Hülsen (30, 130, 230, 330, 405, 415, 425, 435, 445, 630, 730, 830, 930, 1002) gefügt zu werden.

11. Das Batteriesystem nach Anspruch 1, wobei eine erste der Vielzahl von Hülsen (30, 130, 230, 330, 405, 415, 425, 435, 445, 630, 730, 830, 930, 1002) dazu eingerichtet ist, an eine zweite der Vielzahl von Hülsen (30, 130, 230, 330, 405, 415, 425, 435, 445, 630, 730, 830, 930, 1002) lasergeschweisst zu werden.

12. Das Batteriesystem nach Anspruch 1, wobei jede Batteriezelle einen Lüftungsabschnitt (26) aufweist, der dazu eingerichtet ist, es Gasen zu erlauben, aus dem inneren der Batteriezelle zu entweichen, wenn der Druck in der Batteriezelle einen vorbestimmten Pegel erreicht.

13. Das Batteriesystem nach Anspruch 12, wobei die die Batteriezellen enthaltenden Hülsen (30, 130, 230, 330, 405, 415, 425, 435, 445, 630, 730, 830, 930, 1002) jeweils wenigstens einen Ausschnitt nahe des Lüftungsabschnitts aufweisen, um Gasen, die von den Batteriezellen entweichen, zu erlauben, durch die Hülsen (30, 130, 230, 330, 405, 415, 425, 435, 445, 630, 730, 830, 930, 1002) zu gelangen.

14. Das Batteriesystem nach Anspruch 1, wobei wenigstens eine der Vielzahl von Hülsen (30, 130, 230, 330, 405, 415, 425, 435, 445, 630, 730, 830, 930, 1002) wenigstens eines der folgenden Elemente aufweist: eine Relaisanordnung (1010, 1012), eine Wartungsabschaltung (1104), eine gedruckte Leiterplattenanordnung (1152).

15. Das Batteriesystem nach Anspruch 1, wobei die Vielzahl von Vorsprüngen, die sich von der inneren Oberfläche der Vielzahl von Hülsen (30, 130, 230, 330, 405, 415, 425, 435, 445, 630, 730, 830, 930, 1002) erstrecken, längs laufende Rippen (34, 134, 234) sind.

## Revendications

1. Système de batterie (10, 400, 410, 420, 430, 440, 550, 560, 570, 580, 700, 800, 900, 1000), comprenant :
- un ensemble de manchons (30, 130, 230, 330, 405, 415, 425, 435, 445, 630, 730, 830, 930, 1002),
* chacun des manchons de l'ensemble étant couplé à un autre manchon de l'ensemble,
* au moins certains des manchons comportent une cellule de batterie (20, 280), et * les manchons sont configurés pour être couplés et réunis en un ensemble de différentes configurations,
système **caractérisé en ce qu'**au moins certains des manchons comportent un ensemble de parties en saillie (34, 134, 234) de la surface intérieure du manchon pour définir un intervalle entre la surface intérieure du manchon et la cellule de la batterie qui s'y trouve pour permettre le passage d'un fluide de refroidissement au voisinage de la cellule de batterie.

2. Système de batterie selon la revendication 1,
**caractérisé en ce que** l'ensemble des manchons (30, 130, 230, 330, 405, 415, 425, 435, 445, 630, 730, 830, 930, 1002) a une section extérieure de forme générale hexagonale.

3. Système de batterie selon la revendication 1,
**caractérisé en ce qu'**au moins certains manchons de l'ensemble (30, 130, 230, 330, 405, 415, 425, 435, 445, 630, 730, 830, 930, 1002) sont couplés de manière permanente les uns aux autres.

4. Système de batterie selon la revendication 1,
**caractérisé en ce qu'**un premier manchon de l'ensemble des manchons (30, 130, 230, 330, 405, 415, 425, 435, 445, 630, 730, 830, 930, 1002) comporte un élément tubulaire (40, 140, 240) configuré pour recevoir une broche (160) sur un second manchon de l'ensemble des manchons (30, 130, 230, 330, 405, 415, 425, 435, 445, 630, 730, 830, 930, 1002).

5. Système de batterie selon la revendication 1,
**caractérisé en ce qu'**il comprend en outre au moins un élément en forme de broche (60),
* au moins un premier manchon de l'ensemble des manchons (30, 130, 230, 330, 405, 415, 425, 435, 445, 630, 730, 830, 930, 1002) comporte un premier élément tubulaire (40, 240) et un second manchon de l'ensemble des manchons comporte un second élément tubulaire (40, 240) configuré pour être aligné avec le premier élément tubulaire (40, 240), et
* la broche (60) est configurée pour se loger à la fois dans le premier élément tubulaire (40, 240) et dans le second élément tubulaire (40, 240).

6. Système de batterie selon la revendication 1,
**caractérisé en ce que** le premier manchon de l'ensemble des manchons (30, 130, 230, 330, 405, 415, 425, 435, 445, 630, 730, 830, 930, 1002) comporte une nervure (601, 701) configurée pour se loger dans un canal d'un second manchon de l'ensemble des manchons.

7. Système de batterie selon la revendication 1,
**caractérisé en ce qu'**il comporte en outre :
- un élément d'enclipage (411),
* un premier manchon (415) de l'ensemble des manchons comporte une première partie en saillie (413),
* un second manchon de l'ensemble des manchons (415) comporte une seconde partie en saillie (413), et
* l'élément d'enclipage (411) est configuré pour coupler la première partie en saillie (413) à la seconde partie en saillie (413).

8. Système de batterie selon la revendication 1,
**caractérisé en ce qu'**il comprend en outre :
- un cavalier (421),
* un premier manchon de l'ensemble du manchon (425) comporte une première partie en saillie (422), et
* un second manchon de l'ensemble du manchon (425) comporte une seconde partie en saillie (422), et
* le cavalier (421) est configuré pour coupler la première partie en saillie (422) à la seconde partie en saillie (422).

9. Système de batterie selon la revendication 1,
**caractérisé en ce qu'**il comprend en outre :
- un insert (401),
* un premier manchon de l'ensemble des manchons (405) comporte une première cavité (403) dans une première paroi latérale et un second manchon de l'ensemble des manchons (405) comporte une seconde cavité (403) dans une seconde paroi latérale,
* l'insert (401) est configuré pour s'engager à la fois dans la première cavité (403) et la seconde cavité (403).

10. Système de batterie selon la revendication 1,
**caractérisé en ce qu'**un premier manchon de l'ensemble des manchons (30, 130, 230, 330, 405, 415, 425, 435, 445, 630, 730, 830, 930, 1002) est configuré pour être empilé à chaud sur le second ensemble de manchon (30, 130, 230, 330, 405, 415, 425, 435, 445, 630, 730, 830, 930, 1002).

11. Système de batterie selon la revendication 1,
**caractérisé en ce qu'**un premier manchon de l'ensemble des manchons (30, 130, 230, 330, 405, 415, 425, 435, 445, 630, 730, 830, 930, 1002) est configuré pour être soudé par laser à un second manchon de l'ensemble des manchons (30, 130, 230, 330, 405, 415, 425, 435, 445, 630, 730, 830, 930, 1002).

12. Système de batterie selon la revendication 1,
**caractérisé en ce que** chaque cellule de batterie comporte une partie de ventilation (26) permettant aux gaz de l'échapper de l'intérieur de la cellule de batterie lorsque la pression régnant dans la cellule de batterie atteint un niveau prédéterminé.

13. Système de batterie selon la revendication 12,
**caractérisé en ce que** les manchons (30, 130, 230, 330, 405, 415, 425, 435, 445, 630, 730, 830, 930, 1002) comportent des cellules de batterie ayant chacune une ouverture à proximité de l'orifice de ventilation pour permettre aux gaz de s'échapper de la cellule de batterie et traverser les manchons (30, 130, 230, 330, 405, 415, 425, 435, 445, 630, 730, 830, 930, 1002).

14. Système de batterie selon la revendication 1,
**caractérisé en ce qu'**au moins l'un de l'ensemble des manchons (30, 130, 230, 330, 405, 415, 425, 435, 445, 630, 730, 830, 930, 1002) comporte au moins un assemblage à relais (1010, 1012), une interruption de service (1104), et une plaquette de circuit imprimé (1152).

15. Système de batterie selon la revendication 1,
**caractérisé en ce que** l'ensemble de parties en saillie s'étendant de la surface intérieure de l'ensemble des manchons (30, 130, 230, 330, 405, 415, 425, 435, 445, 630, 730, 830, 930, 1002), est constitué par des nervures longitudinales (34, 134, 234).
